# EUROPEAN PATENT APPLICATION

(11) **EP 4 654 640 A1**
(43) Date of publication of application: **26.11.2025**
(21) Application number: 24744190.0
(22) Date of filing: 15.01.2024
(51) Int. Cl.: H04W 12/03, H04W 12/10

(54) **MESSAGE TRANSMISSION METHOD AND APPARATUS, AND DEVICE**

(30) Priority: 19.01.2023 CN 202310086350
(71) Applicant: Vivo Mobile Communication Co., Ltd., Dongguan, Guangdong 523863 (CN)
(72) Inventor: BAO, Wei, Dongguan, Guangdong 523863 (CN); YANG, Xiaodong, Dongguan, Guangdong 523863 (CN); ZHENG, Qian, Dongguan, Guangdong 523863 (CN)
(74) Representative: Cabinet Beaumont
(86) International application number: PCT/CN2024/072233
(87) International publication number: WO 2024/153014

(57) **Abstract**

This application relates to the field of communication technologies, and discloses a message transmission method and apparatus and a device. The message transmission method in embodiments of this application includes: a sending terminal performs security processing on target content at a target layer, where the target layer includes a PDCP layer and/or a protocol layer below the PDCP layer; in a case that the target layer includes the PDCP layer, the target content includes at least one of data or signaling generated by the PDCP layer; and in a case that the target layer includes the protocol layer below the PDCP layer, the target content includes at least one of the following: upper layer data or high layer data received by the target layer, upper layer signaling or high layer signaling received by the target layer, or signaling generated by the target layer. The sending terminal sends a target message, where the target message includes content from the security processing.

## Description

### CROSS-REFERENCE TO RELATED APPLICATIONS

This application claims priority to Chinese Patent Application No. 202310086350.3 filed in China on January 19, 2023, which is incorporated by reference in its entirety.

### TECHNICAL FIELD

This application relates to the field of communication technologies, and in particular, to a message transmission method and apparatus, and a device.

### BACKGROUND

In some communication systems, a sending terminal supports performing security processing on data and signaling. Specifically, a packet data convergence protocol (Packet Data Convergence Protocol, PDCP) layer performs encryption and integrity protection on received data and signaling of a high layer, and a PDCP layer of a receiving terminal performs corresponding decryption and integrity protection verification and submits the data and the signaling to the high layer. Currently, security processing is performed on the received data and signaling of the high layer only by the PDCP layer, resulting in relatively poor security of the communication.

### SUMMARY

Embodiments of this application provide a message transmission method and apparatus, and a device, which can solve a problem of relatively poor security of communication.

According to a first aspect, a message transmission method is provided, including:
a sending terminal performs security processing on target content at a target layer, where the target layer includes a PDCP layer and/or a protocol layer below the PDCP layer; in a case that the target layer includes the PDCP layer, the target content includes at least one of data or signaling generated by the PDCP layer; and in a case that the target layer includes the protocol layer below the PDCP layer, the target content includes at least one of the following: upper layer data or high layer data received by the target layer, upper layer signaling or high layer signaling received by the target layer, or signaling generated by the target layer.

The sending terminal sends a target message, where the target message includes content from the security processing.

According to a second aspect, a message transmission method is provided, including:
a receiving terminal receives a target message; and
the receiving terminal performs, in a case that the target message includes content from security processing, a security verification operation on the content from the security processing at a target layer.

The content from the security processing includes: content obtained by performing security processing on target content at the target layer by a sending terminal.

The target layer includes a packet data convergence protocol PDCP layer and/or a protocol layer below the PDCP layer.

According to a third aspect, a message transmission apparatus is provided, including:
a processing module, configured to perform security processing on target content at a target layer, where the target layer includes a packet data convergence protocol PDCP layer and/or a protocol layer below the PDCP layer; in a case that the target layer includes the PDCP layer, the target content includes at least one of data or signaling generated by the PDCP layer; and in a case that the target layer includes the protocol layer below the PDCP layer, the target content includes at least one of the following: upper layer data or high layer data received by the target layer, upper layer signaling or high layer signaling received by the target layer, or signaling generated by the target layer; and
a sending module, configured to send a target message, where the target message includes content from the security processing.

According to a fourth aspect, a message transmission apparatus is provided, including:
a receiving module, configured to receive a target message; and
a verification module, configured to perform, by the receiving terminal in a case that the target message includes content from security processing, a security verification operation on the content from the security processing at a target layer.

The content from the security processing includes: content obtained by performing security processing on target content at the target layer by a sending terminal.

The target layer includes a packet data convergence protocol PDCP layer and/or a protocol layer below the PDCP layer.

According to a fifth aspect, a communication device is provided. The communication device includes a processor and a memory. The memory stores a program or instructions executable in the processor. The program or the instructions, when executed by a processor, implement steps of the message transmission method at the sending terminal side provided in embodiments of this application, or the program or the instructions, when executed by a processor, implement steps of the message transmission method at the receiving terminal side provided in embodiments of this application.

According to a sixth aspect, a communication device is provided, including a processor and a communication interface. The processor is configured to perform security processing on target content at a target layer. The target layer includes a packet data convergence protocol PDCP layer and/or a protocol layer below the PDCP layer; in a case that the target layer includes the PDCP layer, the target content includes at least one of data or signaling generated by the PDCP layer; and in a case that the target layer includes the protocol layer below the PDCP layer, the target content includes at least one of the following: upper layer data or high layer data received by the target layer, upper layer signaling or high layer signaling received by the target layer, or signaling generated by the target layer; and the communication interface is configured to send a target message, where the target message includes content from the security processing. Alternatively, the communication interface is configured to receive a target message. The processor is configured to perform, by the receiving terminal in a case that the target message includes content from security processing, a security verification operation on the content from the security processing at a target layer. The content from the security processing includes: content obtained by performing security processing on target content at the target layer by a sending terminal. The target layer includes a packet data convergence protocol PDCP layer and/or a protocol layer below the PDCP layer.

According to a seventh aspect, a message transmission system is provided, including a sending terminal and a receiving terminal. The sending terminal may be configured to perform steps of the message transmission method at the sending terminal side provided in embodiment of this application. The receiving terminal may be configured to perform steps of the message transmission method at the receiving terminal side provided in embodiment of this application.

According to an eighth aspect, a readable storage medium is provided. The readable storage medium stores a program or instructions. The program or the instructions, when executed by a processor, implement steps of the message transmission method at the sending terminal side provided in embodiments of this application, or implement steps of the message transmission method at the receiving terminal side provided in embodiments of this application.

According to a ninth aspect, a chip is provided. The chip includes a processor and a communication interface. The communication interface is coupled to the processor. The processor is configured to execute a program or instructions to implement the message transmission method at the sending terminal side provided in embodiments of this application, or implement the message transmission method at the receiving terminal side provided in embodiments of this application.

According to a tenth aspect, a computer program/program product is provided. The computer program/program product is stored in a storage medium. The computer program/program product is executed by at least one processor to implement steps of the message transmission method at the sending terminal side provided in embodiments of this application, or the computer program/program product is executed by at least one processor to implement the steps of the message transmission method at the receiving terminal side provided in embodiments of this application.

In this embodiment of this application, the sending terminal performs security processing on target content at a target layer, where the target layer includes a packet data convergence protocol PDCP layer and/or a protocol layer below the PDCP layer; in a case that the target layer includes the PDCP layer, the target content includes at least one of data or signaling generated by the PDCP layer; and in a case that the target layer includes the protocol layer below the PDCP layer, the target content includes at least one of the following: upper layer data or high layer data received by the target layer, upper layer signaling or high layer signaling received by the target layer, or signaling generated by the target layer. The sending terminal sends a target message, where the target message includes content from the security processing. In this way, security processing may be performed on at least one of the data or the signaling generated by the PDCP layer through the PDCP layer, or security processing may be performed on at least one of received data, received signaling, or generated signaling through the protocol layer below the PDCP layer, thereby improving communication security.

### BRIEF DESCRIPTION OF THE DRAWINGS

FIG. 1 is a block diagram of a wireless communication system to which an embodiment of this application may be applied;
FIG. 2 is a flowchart I of a message transmission method according to an embodiment of this application;
FIG. 3 is a schematic diagram I of a protocol stack according to an embodiment of this application;
FIG. 4 is a schematic diagram II of a protocol stack according to an embodiment of this application;
FIG. 5 is a schematic diagram I of a target message according to an embodiment of this application;
FIG. 6 is a schematic diagram II of a target message according to an embodiment of this application;
FIG. 7 is a schematic diagram III of a target message according to an embodiment of this application;
FIG. 8 is a flowchart II of a message transmission method according to an embodiment of this application;
FIG. 9 is a structural diagram I of a message transmission apparatus according to an embodiment of this application;
FIG. 10 is a structural diagram II of a message transmission apparatus according to an embodiment of this application;
FIG. 11 is a structural diagram I of a communication device according to an embodiment of this application;
FIG. 12 is a structural diagram II of a communication device according to an embodiment of this application; and
FIG. 13 is a block diagram III of a communication device according to an embodiment of this application.

### DETAILED DESCRIPTION

Technical solutions in embodiments of this application are clearly described below with reference to the accompanying drawings in embodiments of this application. Apparently, the described embodiments are merely some rather than all embodiments of this application. All other embodiments obtained by a person of ordinary skill in the art based on embodiments of this application fall within the protection scope of this application.

Terms "first", "second", and the like in the specification and the claims of this application are used for distinguishing between similar objects, rather than describing a specific sequence or order. It should be understood that the terms used in this way may be transposed where appropriate, so that embodiments of this application may be implemented in a sequence other than those illustrated or described herein. In addition, objects defined by "first" and "second" are generally of the same class and do not limit a quantity of objects. For example, one or more first objects may be arranged. In addition, "and/or" in the specification and the claims indicates at least one of the connected objects, and the character "/" generally indicates an "or" relationship between the associated objects.

The term "indication" in the specification and the claims of this application may be an explicit indication or an implicit indication. The explicit indication may be understood as that a sending party explicitly notifies a receiving party of an operation that needs to be performed or a request result in the sent indication. The implicit indication may be understood as that the receiving party determines based on an indication sent by the sending party, and determines, based on a determining result, an operation that needs to be performed or a request result.

It should be noted that the technology described in embodiments of this application may be applied to a long term evolution (Long Term Evolution, LTE)/LTE-advanced (LTE-Advanced, LTE-A) system, and may be further applied to another wireless communication system, such as a code division multiple access (Code Division Multiple Access, CDMA) system, a time division multiple access (Time Division Multiple Access, TDMA) system, a frequency division multiple access (Frequency Division Multiple Access, FDMA) system, an orthogonal frequency division multiple access (Orthogonal Frequency Division Multiple Access, OFDMA) system, a single-carrier frequency division multiple access (Single-carrier Frequency Division Multiple Access, SC-FDMA) system, and another system. Terms "system" and "network" in embodiments of this application are usually interchangeably used, and the described technology may be used for both the system and the radio technology mentioned above, or may be used for another system and another radio technology. A new radio (New Radio, NR) system is described below as an example, and the term NR is used in most of the following description. Nevertheless, the technologies may be applied to applications other than applications of the NR system, such as a 6^{th} Generation (6^{th} Generation, 6G) communication system.

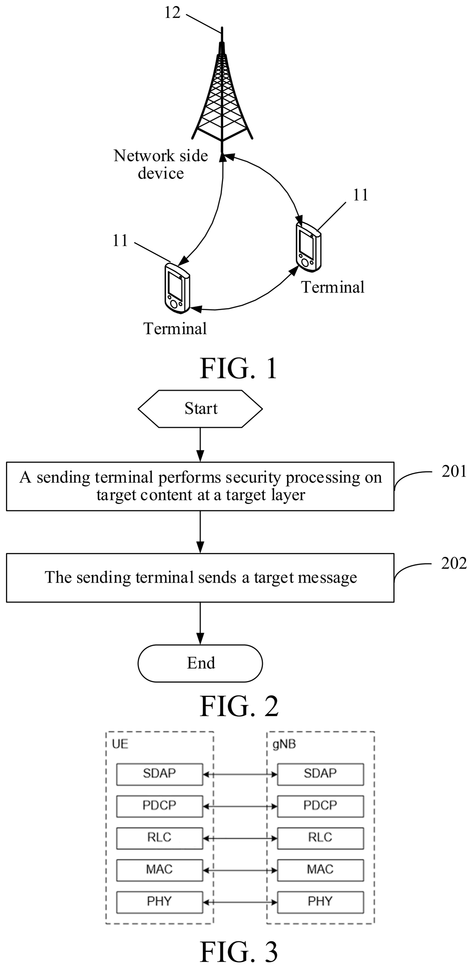

FIG. 1 is a block diagram of a wireless communication system to which an embodiment of this application may be applied. The wireless communication system includes a terminal 11 and a network side device 12. The terminal 11 may be a terminal side device such as a mobile phone, a tablet computer (Tablet Personal Computer), a laptop computer (Laptop Computer), which is also referred to as a notebook computer, a personal digital assistant (Personal Digital Assistant, PDA), a palm computer, a netbook, an ultra-mobile personal computer (Ultra-Mobile Personal Computer, UMPC), a mobile internet device (Mobile Internet Device, MID), an augmented reality (augmented reality, AR)/virtual reality (virtual reality, VR) device, a robot, a wearable device (Wearable Device), an on-board device (Vehicle User Equipment, VUE), a pedestrian user equipment (Pedestrian User Equipment, PUE), smart home (a home device with a wireless communication function, such as a refrigerator, a television, a washing machine, or furniture), a game console, a personal computer (personal computer, PC), a teller machine, or a self-service machine. The wearable device includes a smart watch, a smart bracelet, a smart headset, smart glasses, smart jewelry (a smart wristlet, a smart chain bracelet, a smart ring, a smart necklace, a smart ankle, a smart ankle chain, and the like), a smart wristband, smart clothing, and the like. It should be noted that a specific type of the terminal 11 is not limited in this embodiment of this application. The network side device 12 may include an access network device or a core network device. The access network device may alternatively be referred to as a wireless access network device, a radio access network (Radio Access Network, RAN), a wireless access network function, or a wireless access network unit. The access network device may include a base station, a wireless local area network (Wireless Local Area Network, WLAN) access point, a wireless fidelity (Wireless Fidelity, Wi-Fi) node, or the like. The base station may be referred to as a node B, an evolved node B (Evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmission reception point (Transmission Reception Point, TRP), or another appropriate term in the art. The base station is not limited to a specified technical term, provided that a same technical effect is achieved. It should be noted that in this embodiment of this application, only a base station in the NR system is used as an example, and a specific type of the base station is not limited. The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that in this embodiment of this application, only a core network device in the NR system is used as an example for description, but a specific type of the core network device is not limited.

A message transmission method and apparatus, and a device provided in embodiments of this application are described in detail below through some embodiments and application scenarios thereof with reference to the accompany drawings.

Refer to FIG. 2. FIG. 2 is a flowchart of a message transmission method according to an embodiment of this application. As shown in FIG. 2, the method includes the following steps.

Step 201: A sending terminal performs security processing on target content at a target layer, where the target layer includes a PDCP layer and/or a protocol layer below the PDCP layer. In a case that the target layer includes the PDCP layer, the target content includes at least one of data or signaling generated by the PDCP layer. In a case that the target layer includes the protocol layer below the PDCP layer, the target content includes at least one of the following: upper layer data or high layer data received by the target layer, upper layer signaling or high layer signaling received by the target layer, or signaling generated by the target layer.

The foregoing protocol layers below the PDCP layer may be one or more protocol layers below the PDCP layer, for example, the protocol layer below the foregoing PDCP layer may include at least one of a media access control (Media Access Control, MAC) layer and a radio link control (Radio Link Control, RLC) layer.

The foregoing target layer includes the PDCP layer, and/or the protocol layer below the PDCP layer may be understood as one of the following.

The target layer includes the PDCP layer or the protocol layer below the PDCP layer; or
the target layer includes the PDCP layer and the protocol layer below the PDCP layer.

The foregoing signaling generated by the PDCP layer may include a protocol data unit (Protocol Data Unit, PDU).

The data received by the foregoing target layer may be data received by the protocol layer below the PDCP layer, and the data may be data generated by a high layer. For example, data received from the high layer includes signaling generated by the high layer, and the data is used as bearer data (payload) of the protocol layer below the PDCP layer.

The signaling received by the foregoing target layer may be signaling received by the protocol layer below the PDCP layer, and the data may be signaling generated by the high layer.

The signaling generated by the foregoing target layer may be signaling generated by the protocol layer below the PDCP layer, for example, an RLC control PDU generated by the RLC layer or a medium access control control element (Media Access Control Control Element, MAC CE) generated by the MAC layer.

In some implementations, the PDCP layer performs security processing on the signaling generated by the PDCP layer.

In some implementations, the MAC layer performs security processing on the signaling generated by the MAC layer, and the MAC layer performs security processing on the received data.

In some implementations, the RLC layer performs security processing on the signaling generated by the RLC layer, and the RLC layer performs security processing on the received data.

In some implementations, the PDCP layer performs security processing on the signaling generated by the PDCP layer, the MAC layer performs security processing on the signaling generated by the MAC layer, the MAC layer performs security processing on the received data, and the RLC layer performs security processing on the signaling generated by the RLC layer.

In some implementations, the PDCP layer performs security processing on the signaling generated by the PDCP layer, the MAC layer performs security processing on the signaling generated by the MAC layer, the RLC layer performs security processing on the signaling generated by the RLC layer, and the RLC layer performs security processing on the received data.

In some implementations, the MAC layer performs security processing on the signaling generated by the MAC layer, the MAC layer performs security processing on the received data, and the RLC layer performs security processing on the signaling generated by the RLC layer.

In some implementations, the MAC layer performs security processing on the signaling generated by the MAC layer, the RLC layer performs security processing on the signaling generated by the RLC layer, and the RLC layer performs security processing on the received data.

It should be noted that in embodiments of this application, "generation" may alternatively be referred to as "production".

The foregoing sending terminal may be a terminal or a network side device, and the corresponding receiving terminal may be a network side device or a terminal.

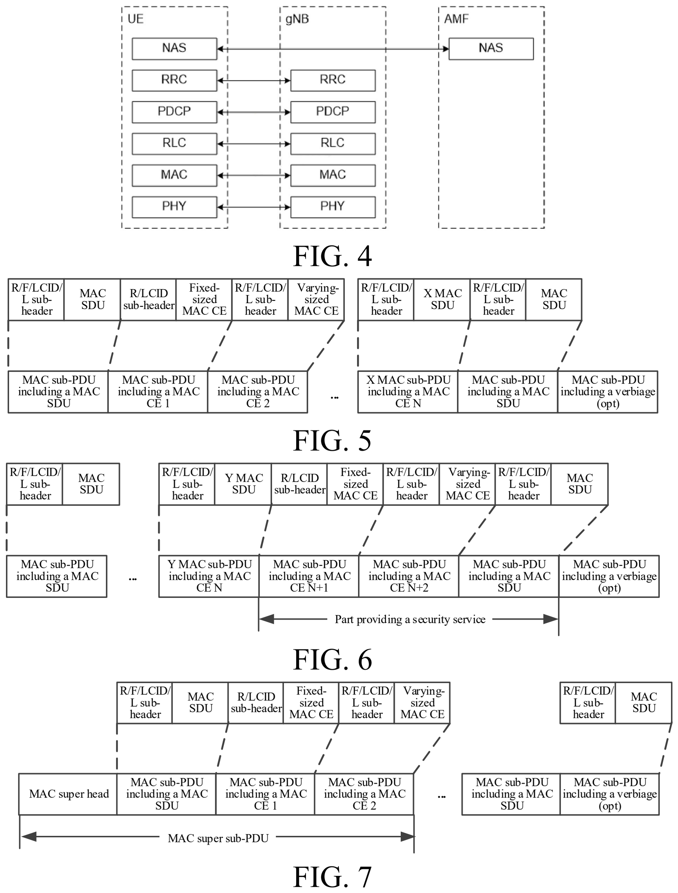

In some implementations, a user plane protocol stack between the sending terminal and the receiving terminal may be shown in FIG. 3, and a control protocol stack between the sending terminal and the receiving terminal may be shown in FIG. 4. It should be noted that FIG. 3 and FIG. 4 are merely examples of a 5G communication system. In this embodiment of this application, a protocol stack is not limited.

Step 202: The sending terminal sends a target message, where the target message includes content from the security processing.

In some implementations, the foregoing target message may be a PDU on a target layer, for example, a MAC PDU, an RLC PDU, or a PDCP PDU.

In some implementations, the foregoing target message may be a target layer transport block (Transport Block, TB), for example, a MAC TB.

In some implementations, the foregoing target message may be a message sent to the receiving terminal, and the message includes a PDU or a TB at the target layer.

Content from the foregoing security processing is content obtained by the security processing in step 201, or content obtained by the security processing, or content obtained after the security processing, or content formed after the security processing. For example, the content includes at least one of the following:
an encrypted ciphertext;
check codes generated to verify integrity; or
integrity protected data.

In this embodiment of this application, through the foregoing steps, security processing may be performed on at least one of the data or the signaling generated by the PDCP layer through the PDCP layer, or security processing may be performed on at least one of received data, received signaling, or generated signaling through the protocol layer below the PDCP layer, thereby improving communication security.

In an optional implementation, the security processing includes at least one of the following:
encryption or integrity protection.

In this implementation, same encryption and integrity protection may be used for different data or signaling, or encryption processing is used for some data or signaling, and integrity protection processing is used for another data or signaling, or a plurality of data or signaling is concatenated, and then at least one of encryption or integrity protection is performed on concatenated content.

It should be noted that in this embodiment of this application, encryption and integrity protection may be encryption and integrity protection defined in a protocol, which are not limited.

In this implementation, the communication security can be improved through the foregoing encryption and integrity protection.

Optionally, in a case that the target content includes a plurality of pieces of content, the encryption includes:
concatenating the plurality of pieces of content, and encrypting the concatenated content; and/or
in a case that the target content includes a plurality of pieces of content, the integrity protection includes:
   concatenating the plurality of pieces of content, and performing integrity protection on the concatenated content.

The plurality of pieces of content may be a plurality of data, a plurality of signaling, or at least one data and at least one signaling, such as a plurality of service data units (Service Data Unit, SDU) or a plurality of control signaling. It should be noted that one of the plurality of pieces of content may be data or signaling. In addition, the SDU may be a PDCP SDU, an RLC SDU, or a MAC SDU. The control signaling may be a PDCP control PDU, an RLC control PDU, or a MAC CE.

In this implementation, because the plurality of pieces of content are concatenated and then security processing is performed, calculation overheads can be reduced. In addition, the plurality of pieces of content are concatenated and then security processing is performed, so that content on which security processing is performed is more secure.

It should be noted that in this embodiment of this application, security processing may also be separately performed for the plurality of pieces of content, which is not limited.

In an optional implementation, the target message further includes:
a first sub-PDU or a first sub-header, where the first sub-PDU or the first sub-header is used to indicate at least one of the following:
a position of the content from the security processing in the target message; or
a position, in the target message, of content on which the security processing is not performed by the target layer.

In some implementations, the foregoing first sub-PDU may be a target layer sub-PDU, for example, a MAC sub-PDU (MAC sub-PDU), an RLC sub-PDU (RLC sub-PDU), or a PDCP sub-PDU (PDCP sub-PDU).

The first sub-header may be a target layer sub-header, for example, a MAC sub-header, an RLC sub-header, or an PDCP sub-header.

The content on which security processing is not performed by the target layer may be content on which security processing is not performed, or may be content on which security processing is performed on the high layer.

It should be noted that in a case that the foregoing first sub-PDU or the first sub-header indicates the content on which the security processing is included in the foregoing target message, the receiving terminal may determine, through the foregoing first sub-PDU or the first sub-header, that the content that is not indicated is content on which the security processing is not performed by the target layer. In a case that the foregoing first sub-PDU or the first sub-header indicates content on which the security processing is not performed on the foregoing target layer, the receiving terminal may determine, through the first sub-PDU or the first sub-header, that the content that is not indicated is the content on which the security processing is performed.

In this implementation, the receiving terminal can accurately determine the content on which the security processing is performed and the content on which the security processing is not performed by the target layer through the first sub-PDU or the first sub-header, so that the target layer of the receiving terminal only needs to perform security verification on the content on which the security processing is performed, to reduce power consumption of the receiving terminal or processing complexity of the receiving terminal.

Optionally, the first sub-PDU or the first sub-header indicates, through a position of the first sub-PDU or the first sub-header in the target message, at least one of the following:
a position of the content from the security processing in the target message; or
a position, in the target message, of content on which the security processing is not performed by the target layer.

The position of the first sub-PDU or the first sub-header in the target message may indicate that one side of the position is content on which the security processing is performed, or indicate that an other side of the position is content on which the security processing is not performed by the target layer.

In some implementations, content in the target message located on a first side of the first sub-PDU or the first sub-header includes the content from the security processing; and/or
content in the target message located on a second side of the first sub-PDU or the first sub-header includes the content on which the security processing is not performed; and
the first side and the second side are two sides opposite to each other.

For example, the foregoing first side is a left side or the foregoing target message is located before the foregoing first sub-PDU or the first sub-header, the foregoing second side is a right side or the foregoing target message is located behind the first sub-PDU or the first sub-header, the foregoing first side is a right side or the foregoing target message is located behind the first sub-PDU or the first sub-header, and the foregoing second side is a left side or the foregoing target message is located before the first sub-PDU or the first sub-header.

In some implementations, at least one of the above may further be indicated with reference to a length, for example, content that indicates a certain length of the first side is content from the security processing. The length is a length corresponding to the content from the security processing.

In some implementations, at least one of the above may further be indicated with reference to a length, for example, content that indicates a certain length on the first side is content obtained after the security processing. The length is a length corresponding to the content obtained after the security processing.

In the foregoing implementation, at least one of the above is indicated through the position of the foregoing first sub-PDU or the first sub-header in the target message, to indicate content/part of the target message on which the target layer in the receiving terminal performs security processing.

In an optional implementation, the first sub-PDU or the first sub-header is further used to indicate at least one of the following:
a parameter used for encryption;
a parameter used for integrity protection;
a bit stream used for integrity protection; or
a length corresponding to the content from the security processing.

In a case that the first sub-PDU or the first sub-header indicates the length corresponding to the content from the security processing, at least one of the following is indicated through the position of the first sub-PDU or the first sub-header in the target message and the length corresponding to the content from the security processing:
a position of the content from the security processing in the target message; or
a position, in the target message, of content on which the security processing is not performed by the target layer.

In some implementations, the foregoing parameter may include a serial number (Serial Number, SN).

In some implementations, the foregoing parameter may include a key.

For example, the foregoing encryption may be generating a password (bit) stream based on an encryption input parameter (the serial number, the key, or the like); performing an operation through the password (bit) stream and the target content, to obtain an encrypted data stream; and performing, by the receiving terminal, a corresponding decryption operation after the encrypted data stream is received, to obtain a decrypted data stream.

For another example, the foregoing integrity protection may refer to obtaining a bit stream having a preset length (for example, 32 bits) based on an input parameter (a serial number, a key, to-be-integrity protected data, and the like). The bit stream may be referred to as a message authentication code-integrity (Message Authentication Code - Integrity, MAC-I). A change of any input parameter may cause a change in transmission of an outputted MAC-I. The sending terminal sends the MAC-I (referred to as a MAC-I-1) together with the integrity protected data, and after receiving the MAC-I (MAC-I-2), the receiving terminal performs calculation based on the integrity protected data. The receiving terminal compares the MAC-I-1 and the MAC-I-2. If the MAC-I-1 and the MAC-I-2 are the same, it is considered that the to-be-integrity protected data is sent by an expected sending terminal and is not tampered with. In other words, the integrity check succeeds.

In some implementations, the parameter used for encryption and the parameter used for integrity protection above may be the same or different. For example, the serial number used for encryption and the serial number used for integrity protection may be one serial number, namely, only carry one serial number, and are used for two objectives: encryption and integrity protection.

The length corresponding to the content on which the foregoing security processing is performed may be a length of the target content before the security processing, or may be a length of the content on which the security processing is performed, namely, a length after the security processing. If the length is the length before the security processing, the receiving terminal may determine the length after the processing based on a protocol definition.

It should be noted that the first sub-PDU or the first sub-header above may explicitly or implicitly indicate at least one of the parameter used for encryption, the parameter used for integrity protection, the bit stream used for integrity protection, or the length corresponding to the content from the security processing.

In some implementations, the first sub-PDU or the first sub-header is used to explicitly indicate at least one of the parameter used for encryption or the parameter used for integrity protection; or
the first sub-PDU or the first sub-header implicitly indicates, through a transmission resource of the target message, at least one of the parameter used for encryption or the parameter used for integrity protection.

That the first sub-PDU or the first sub-header above implicitly indicates the parameter through the transmission resource of the target message may be that the first sub-PDU or the first sub-header does not include the foregoing parameter, and a resource time position, or a resource frequency position, or a resource time-frequency position of the wireless resource used for transmission of the target message is mapped to the foregoing parameter, for example, the resource time position, or the resource frequency position, or the resource time-frequency position of the wireless resource used for transmission of the target message is mapped as the serial number for use. A specific mapping rule may be agreed upon by the protocol or configured by the network side.

In this implementation, the foregoing parameters may be implicitly indicated to save overhead of the target message.

In an optional implementation, the first sub-PDU is a first MAC sub-PDU, the first MAC sub-PDU includes a first MAC CE, and the first MAC CE is a MAC CE used to indicate at least one of the following:
a position of the content from the security processing in the target message; or
a position, in the target message, of content on which the security processing is not performed by the target layer.

The foregoing first MAC CE may be a newly defined MAC CE, or the first MAC CE is a MAC CE in a specific format. The format of the MAC CE may be indicated through a MAC sub-header in the first MAC sub-PDU. For example, the format is indicated through a logical channel identity (logical Channel Identity, LCID) in the MAC sub-header. The receiving terminal determines, based on the MAC sub-header of the first MAC sub-PDU, that the first MAC CE is used to indicate at least one of the following:
a position of the content from the security processing in the target message; or
a position, in the target message, of content on which the security processing is not performed by the target layer.

It should be noted that an identification manner of the first MAC CE is not limited in this embodiment of this application, for example, the foregoing first MAC CE or the foregoing first MAC sub-PDU may be the MAC CE or the MAC sub-PDU agreed on by the protocol for indicating at least one of the following:
a position of the content from the security processing in the target message; or
a position, in the target message, of content on which the security processing is not performed by the target layer.

In this implementation, because the indication is performed by newly introducing the MAC sub-PDU, a format of another part of the target message does not need to be modified, thereby reducing complexity of improving the communication security.

Optionally, the first MAC CE is further used to indicate at least one of the following:
a parameter used for encryption;
a parameter used for integrity protection;
a bit stream used for integrity protection; or
a length corresponding to the content from the security processing.

In a case that the first MAC CE indicates the length corresponding to the content from the security processing, the first MAC CE indicates at least one of the following based on the length corresponding to the content from the security processing and a position of the first MAC sub-PDU in the target message:
a position of the content from the security processing in the target message; or
a position, in the target message, of content on which the security processing is not performed by the target layer.

It should be noted that for the parameter, the bit stream, and the length above, reference may be made to the corresponding descriptions in the foregoing implementations, and for a specific indication manner, reference may also be made to the corresponding descriptions in the foregoing implementations. Details are not described herein again.

In this implementation, at least one of the above may be indicated through the first MAC CE.

An embodiment is shown in FIG. 5. The foregoing first MAC sub-PDU is an X MAC sub-PDU in FIG. 5, and the foregoing first MAC CE is an X MAC CE in FIG. 5. As shown in FIG. 5, a left side of the X MAC sub-PDU is a part participating in MAC layer security processing, namely, content from the foregoing security processing. A right side of the X MAC sub-PDU is a part that does not participate in the MAC layer security processing, that is, content on which the security processing is not performed on the MAC layer.

In another embodiment, as shown in FIG. 6, the foregoing first MAC sub-PDU is a Y MAC sub-PDU in FIG. 6 and the foregoing first MAC CE is a Y MAC CE in FIG. 6. The Y MAC CE includes a length corresponding to content on which security processing is performed, and the length is represented as L. As shown in FIG. 6, content that is on a right side of the Y MAC sub-PDU and has a length of L is a part participating in the MAC layer security processing, namely, content from the foregoing security processing. Content after a specified length (L) is specified on the left side and the right side of the Y MAC sub-PDU is a part that does not participate in the security processing on the MAC layer, namely, content on which security processing is not performed on the MAC layer.

It should be noted that FIG. 5 and FIG. 6 are merely used as examples. In this embodiment of this application, the PDU of the target layer and a sub-header composition (for example, whether to include an R/F/L field) of the MAC CE are not limited, and FIG. 5 and FIG. 6 are merely described by using an example in which the target layer is the MAC layer.

In an optional implementation, the first sub-header is a MAC sub-header of a second MAC sub-PDU included in the target message, and the second MAC sub-PDU further includes the content from the security processing.

The MAC sub-header may be a newly defined MAC sub-header, and the MAC sub-header may be specific information in a specific format or bearer, to indicate that the MAC sub-header is used to indicate at least one of the following:
a position of the content from the security processing in the target message; or
a position, in the target message, of content on which the security processing is not performed by the target layer.

The receiving terminal determines, based on the format of the MAC sub-header or the carried information, that the MAC sub-header is used to indicate the at least one position.

In this implementation, indication may be performed through the MAC sub-header of the second MAC sub-PDU, so that the format of the target message does not need to be modified, thereby reducing complexity of improving the communication security.

Optionally, the MAC sub-header is further used to indicate at least one of the following:
a parameter used for encryption;
a parameter used for integrity protection;
a bit stream used for integrity protection; or
a length field, where the length field is used to indicate a length of a load part of the second MAC sub-PDU, and the load part includes the content from the security processing.

It should be noted that for the parameter, the bit stream, and the length above, reference may be made to the corresponding descriptions in the foregoing implementations, and for a specific indication manner, reference may also be made to the corresponding descriptions in the foregoing implementations. Details are not described herein again.

In this implementation, at least one of the above may be indicated through the MAC sub-header.

In an embodiment, the foregoing target message may be shown in FIG. 7. The foregoing second MAC sub-PDU is a MAC super sub-PDU (MAC Super sub-PDU) in FIG. 6, the MAC sub-header is a MAC super header (MAC super header), and the length field may indicate a length of a payload (payload) part of the MAC super sub-PDU, namely, a length of a remaining part of the MAC super sub-PDU except the sub-header. In this way, the receiving terminal may learn, based on the length field, a part in the received MAC PDU that needs to be performed with security processing.

It should be noted that FIG. 7 is merely used as an example. In this embodiment of this application, the PDU of the target layer and the sub-header composition (for example, whether to include an R/F/L field) of the MAC CE are not limited, and FIG. 7 is described by using an example in which the target layer is the MAC layer.

In an optional implementation, the method further includes:
the target layer of the sending terminal receives a processing indication, where the processing indication is used to indicate at least one of the following:
performing security processing on the target content, or skipping performing security processing on the target content;
content that needs security processing; or
content that does not need security processing.

The foregoing processing indication may be a processing indication provided by the high layer to the target layer. For example, when submitting a high layer PDU to the MAC layer, the high layer indicates the MAC layer that whether ciphering and/or integrity protection needs to be performed on the to-be-transmitted PDU. In other words, for data on which ciphering and/or integrity protection is performed on the PDCP, the high layer does not need to instruct a bottom layer to perform repeated ciphering and/or integrity protection.

In this implementation, the foregoing step 201 may include at least one of the following:
performing security processing on the target content in a case of instructing to perform the security processing on the target content;
performing security processing on the target content in a case that the content indicating that the security processing needs to be performed includes the target content; or
performing the security processing on the target content in a case that the content indicating that the security processing does not need the security processing does not include the target content.

For example, in a case that the target layer is the MAC layer, for all high layers in a MAC PDU/Transport Block (Transport Block, TB) that indicate to-be-integrity protected data, the MAC layer generates a MAC-I (namely, not each to-be-protected PDU of the high layer generates a MAC-I, to reduce protocol overhead). The sending terminal carries the first sub-PDU or the first sub-header in the MAC PDU/TB, to notify the receiving terminal of data to be acknowledged by integrity protection, so that the receiving terminal performs integrity protection verification. Alternatively, the sending terminal instructs to carry the foregoing first sub-PDU or the first sub-header to the MAC PDU/TB, to notify the receiving terminal of the to-be-encrypted data, so that the receiving terminal performs decryption.

In the foregoing implementation, because the foregoing processing indication is received, it can be implemented that the security processing is performed based on the foregoing processing indication. In this way, only the indicated content needs to be completely processed, thereby saving calculation overheads, and further improving flexibility of the security processing at the target layer. In other words, the content on which the security processing is performed by the target layer can be flexibly configured by the foregoing processing indication.

It should be noted that the foregoing target content may also be pre-configured by the protocol or the network side.

In an optional implementation, the target layer includes at least one of the following: a MAC layer or an RLC layer;
in a case that the target layer includes the MAC layer, the target message includes a MAC PDU or a MAC transport block TB; and
in a case that the target layer includes the RLC layer, the target message includes an RLC PDU.

In this implementation, security processing may be performed on at least one of the MAC layer or the RLC layer. For example, the MAC layer performs security processing on the received data and signaling, and the signaling generated by the MAC layer. For another example, the RLC layer performs security processing on the received data and signaling, and the signaling generated by the RLC layer.

Optionally, in a case that the target layer includes the MAC layer, the target content includes at least one of the following:
a MAC sub-PDU corresponding to the MAC SDU and a MAC sub-PDU corresponding to the second MAC CE.

The MAC SDU includes at least one of data received by the MAC layer or signaling received by the MAC layer; and
the second MAC CE is signaling generated by the MAC layer.

The foregoing MAC SDU may be one or more MAC SDUs, and the foregoing second MAC CE may be one or more MAC CEs.

That the foregoing target content includes at least one of the above may be understood as that the type of the target content may include at least one of the following:
a MAC sub-PDU corresponding to the MAC SDU and a MAC sub-PDU corresponding to the second MAC CE.

In this implementation, the MAC layer may have the following behaviors:
generating a corresponding MAC sub-PDU for the received MAC SDU X;
generating a corresponding MAC sub-PDU for the generated second MAC CE;
concatenating the MAC sub-PDUs including the MAC SDU X on which the MAC layer security processing needs to be performed and the second MAC CE together, to perform integrity protection (generate a MAC-I for all MAC sub-PDUs) and/or encryption; and
generating the foregoing first MAC sub-PDU corresponding to the first MAC CE (for example, the foregoing X MAC CE).

In this implementation, security processing may be performed on at least one of the MAC sub-PDU corresponding to the MAC SDU or the MAC sub-PDU corresponding to the second MAC CE, to improve communication security.

In some implementations, the foregoing target message may include at least one of the following:
the foregoing target content, the content on which security processing is not performed on the foregoing target layer, and the foregoing first sub-PDU or the first sub-header.

In this embodiment of this application, the sending terminal performs security processing on target content at a target layer, where the target layer includes a packet data convergence protocol PDCP layer and/or a protocol layer below the PDCP layer. In a case that the target layer includes the PDCP layer, the target content includes at least one of data or signaling generated by the PDCP layer. In a case that the target layer includes the protocol layer below the PDCP layer, the target content includes at least one of the following: upper layer data or high layer data received by the target layer, upper layer signaling or high layer signaling received by the target layer, or signaling generated by the target layer. The sending terminal sends a target message, where the target message includes content from the security processing. In this way, security processing may be performed on at least one of the data or the signaling generated by the PDCP layer through the PDCP layer, or security processing may be performed on at least one of received data, received signaling, or generated signaling through the protocol layer below the PDCP layer, thereby improving communication security.

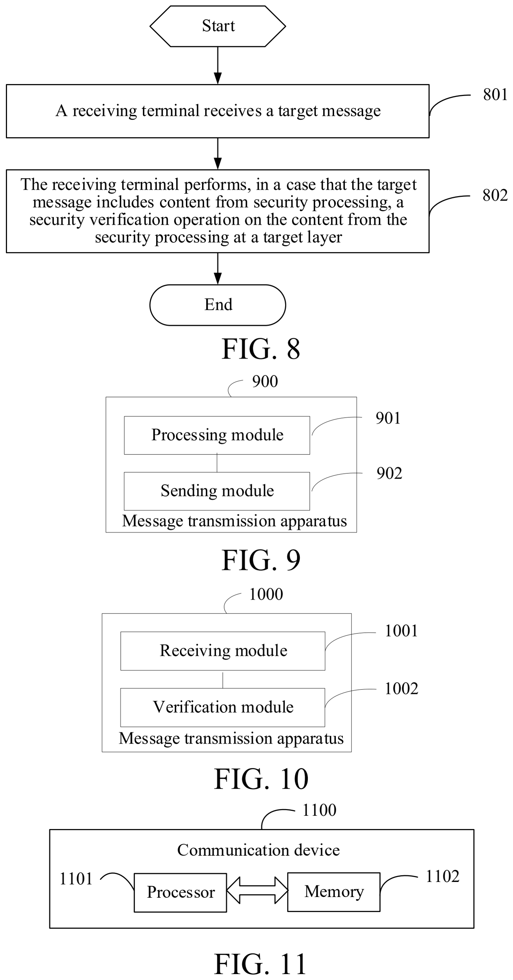

Refer to FIG. 8. FIG. 8 is a flowchart of a message transmission method according to an embodiment of this application. As shown in FIG. 8, the method includes the following steps.

Step 801: A receiving terminal receives a target message.

Step 802: The receiving terminal performs, in a case that the target message includes content from security processing, a security verification operation on the content from the security processing at a target layer.

The content from the security processing includes: content obtained by performing security processing on target content at the target layer by a sending terminal.

The target layer includes a packet data convergence protocol PDCP layer and/or a protocol layer below the PDCP layer.

Optionally, the method further includes at least one of the following:

The target layer of the receiving terminal discards the content from the security processing in a case that the security verification operation indicates that the security verification fails; or
the target layer of the receiving terminal submits first content obtained from the security verification operation to a high layer.

A security verification failure indicated by the foregoing security verification operation indicates may be an integrity protection verification failure.

When the security verification operation indicates that the security verification fails, the target layer of the receiving terminal discards the content from the security processing. In this way, it can be avoided that the target layer submits content that the security verification of the target layer fails to a high layer, thereby further improving communication security.

Optionally, the method further includes at least one of the following:

The target layer of the receiving terminal notifies the high layer that security verification on the content fails in a case that the receiving terminal discards the content carried in the target message; or
the target layer of the receiving terminal notifies, in a case that the target layer of the receiving terminal submits content obtained from the security verification operation to the high layer, the high layer that security verification on the content obtained by the security verification operation succeed.

In this implementation, the foregoing interaction performance of the protocol layers in the receiving terminal may be improved through the foregoing notification. For example, the MAC layer of the receiving terminal performs decryption and/or an integrity protection acknowledgement based on the first sub-PDU or the first sub-header in the TB; and submits the data obtained after the integrity protection acknowledgement processing succeeds to a high layer, and notifies the high layer that the data is decrypted and/or the integrity protection acknowledgement succeeds. For a data packet for which the integrity protection acknowledgement fails, the MAC layer notifies the high layer. For example, notifies one or more of the RLC, the PDCP, and the radio resource control (Radio Resource Control, RRC) layers that the integrity protection verification fails.

Optionally, the method further includes:
the target layer of the receiving terminal submits, in a case that the target layer determines that the target message includes content on which security processing is not performed, second content on which security verification is not performed by the target layer to the high layer.

The high layer of the receiving terminal discards the second content submitted by the target layer, where the second content is content on which security verification needs to be performed by the target layer.

The foregoing second content may be content learned at the high layer that needs the target layer to perform security verification, for example, content determined at the high layer through a protocol or configuration at a network side that needs the target layer to perform security verification.

In this implementation, the high layer of the receiving terminal discards the second content submitted by the target layer. In this way, communication security can be further improved. For example, the sending terminal is malicious. The sending terminal sends a tampered PDCP control PDU (encapsulated into an RLC PDU and transmitted to a MAC). However, the MAC indication message of the sending terminal indicates the receiving terminal. The high layer SDU does not need bottom layer security, and the MAC of the receiving terminal may assume that high layer security processing is performed on the high layer SDU. Verification is not performed and is directly submitted to the high layer. If finding, by the receiving terminal, that the control PDU does not have security protection performed by the PDCP layer and does not perform bottom layer security verification, the control PDU is problematic (that is, the security authentication fails at all), the control PDU is discarded.

Optionally, the security processing includes at least one of the following:
encryption or integrity protection; and
the security verification operation includes at least one of the following:
   decryption or integrity protection verification.

Optionally, the target message further includes:
a first sub-protocol data unit PDU or a first sub-header, where the first sub-PDU or the first sub-header is used to indicate at least one of the following:
a position of the content from the security processing in the target message; or
a position, in the target message, of content on which the security processing is not performed by the target layer.

That the receiving terminal performs, in a case that the target message includes content from security processing, a security verification operation on the content from the security processing at a target layer includes:

The receiving terminal performs a security verification operation on the content from the security processing at the target layer in a case that the receiving terminal determines that the target message includes the content from the security processing, based on the first PDU or the first sub-header.

Optionally, the first sub-PDU or the first sub-header indicates, through a position of the first sub-PDU or the first sub-header in the target message, at least one of the following:
a position of the content from the security processing in the target message; or
a position, in the target message, of content on which the security processing is not performed by the target layer.

Optionally, content in the target message located on a first side of the first sub-PDU or the first sub-header includes the content from the security processing; and/or
content in the target message located on a second side of the first sub-PDU or the first sub-header includes the content on which the security processing is not performed; and
the first side and the second side are two sides opposite to each other.

Optionally, the first sub-PDU or the first sub-header is further used to indicate at least one of the following:
a parameter used for encryption;
a parameter used for integrity protection;
a bit stream used for integrity protection; or
a length corresponding to the content from the security processing.

That the receiving terminal performs a security verification operation on the content from the security processing at the target layer in a case that the receiving terminal determines that the target message includes the content from the security processing, based on the first PDU or the first sub-header includes:

The receiving terminal performs the security verification operation on the content from the security processing at the target layer based on at least one of the parameter used for encryption, the parameter used for integrity protection, or the bit stream used for integrity protection in a case that the receiving terminal determines that the target message includes the content from the security processing based on the first PDU or the first sub-header and determines the position of the content from the security processing in the target message based on the first PDU or the first sub-header. The receiving terminal determines the position of the content from the security processing in the target message based on the position of the first sub-PDU or the first sub-header in the target message and the length corresponding to the content from the security processing in a case that the first sub-PDU or the first sub-header indicates the length corresponding to the content from the security processing.

Optionally, the first sub-PDU is a first media access control MAC sub-protocol data unit PDU, the first MAC sub-PDU includes a first MAC control element CE, and the first MAC CE is a new MAC CE used to indicate at least one of the following:
a position of the content from the security processing in the target message; or
a position, in the target message, of content on which the security processing is not performed by the target layer.

Optionally, the first MAC CE is used to indicate at least one of the following:
a parameter used for encryption;
a parameter used for integrity protection;
a bit stream used for integrity protection; or
a length corresponding to the content from the security processing.

In a case that the first MAC CE indicates the length corresponding to the content from the security processing, the first MAC CE indicates at least one of the following based on the length corresponding to the content from the security processing and a position of the first MAC sub-PDU in the target message:
a position of the content from the security processing in the target message; or
a position, in the target message, of content on which the security processing is not performed by the target layer.

Optionally, the first sub-header is a MAC sub-header of a second MAC sub-PDU included in the target message, and the second MAC sub-PDU further includes the content from the security processing.

Optionally, the MAC sub-header is further used to indicate at least one of the following:
a parameter used for encryption;
a parameter used for integrity protection;
a bit stream used for integrity protection; or
a length field, where the length field is used to indicate a length of a load part of the second MAC sub-PDU, and the load part includes the content from the security processing.

Optionally, the target layer includes at least one of the following: a MAC layer or an RLC layer;
in a case that the target layer includes the MAC layer, the target message includes a MAC PDU or a MAC transport block TB; and
in a case that the target layer includes the RLC layer, the target message includes an RLC PDU.

Optionally, the target content includes at least one of the following: a MAC sub-PDU corresponding to a MAC service data unit SDU or a MAC sub-PDU corresponding to a second MAC CE.

The MAC SDU includes at least one of data received by the MAC layer of the sending terminal or signaling received by the MAC layer.

The second MAC CE is signaling generated by the MAC layer of the sending terminal.

It should be noted that this embodiment serves as the implementation of the receiving terminal corresponding to the embodiment shown in FIG. 2. For a specific implementation, reference may be made to the relevant description in the embodiment shown in FIG. 2. To avoid repetition, details are not described in this embodiment.

The message transmission method provided in embodiments of this application is illustrated through a plurality of embodiments.

### Embodiment I

In this embodiment, a high layer indicates data on which security processing needs to be performed on a MAC layer, which is specifically as follows.

A MAC layer of a sending terminal receives a high layer PDU, and indicates whether security processing needs to be performed on the PDU. For example,
the high layer indicates a high layer PDU on which security processing needs to be performed, or indicates a high layer PDU on which security processing does not need to be performed.

The security processing refers to encryption and/or integrity protection. The high layer may indicate to independently enable encryption or integrity protection.

The high layer PDU on which security processing does not need to be performed includes: a PDU corresponding to data on which ciphering and/or integrity protection is performed on the PDCP layer, where the corresponding PDU refers to that the PDU includes data on which ciphering and/or integrity protection is performed on the PDCP layer. Alternatively, the high layer PDU on which security processing needs to be performed includes: a PDU corresponding to data on which PDCP layer encryption and/or integrity protection is not performed, where a corresponding PDU refers to data included in the PDU: no processing is performed on the PDCP layer or no PDCP encryption and/or integrity protection is performed.

### Embodiment II

In this embodiment, as shown in FIG. 5, the MAC layer generates a MAC-I (separated by a specific MAC CE) based on a high layer indication, which is specifically as follows.

Step 1: For each MAC SDU X submitted by a high layer received by a MAC layer of the sending terminal, the high layer indicates whether the MAC SDU X needs to participate in MAC layer security processing.

Step 2: The MAC layer of the sending terminal generates the MAC PDU, including the following operations.
A: Generate a corresponding MAC sub-PDU for the received MAC SDU X;
B: Generate a corresponding MAC sub-PDU for the generated MAC CE;
C: Concatenate the MAC sub-PDUs including the MAC SDU X on which the MAC layer security processing needs to be performed and the MAC CE together, to perform integrity protection (generate a MAC-I for all MAC sub-PDUs) and/or encryption.
D: Generate a specific X MAC CE (X MAC CE) corresponding to a newly defined X MAC sub-PDU.
E: Separate data processed in C from another MAC sub-PDU on which security processing is not performed through the X MAC sub-PDU. As shown in FIG. 5, the left side of the X MAC sub-PDU is a part participating in the MAC layer security processing. A right side of the X MAC sub-PDU is a part that does not participate in the MAC layer security processing.

In this way, the receiving terminal may determine, by identifying the newly defined specific MAC CE, a part in the received MAC PDU that needs to be performed with security processing, namely, decryption and/or integrity verification.

In addition, the X MAC CE may include one or more of the following pieces of information:
an SN explicitly carried: a serial number used for encryption and/or integrity protection; or
a MAC-I used for integrity protection.

If the SN is not explicitly carried in the MAC PDU, the SN may be mapped to the SN through a resource time position, a resource frequency position, or a resource time-frequency position of a wireless resource used for transmission of the MAC PDU (namely, implicitly carried).

### Embodiment III

In this embodiment, as shown in FIG. 7, the MAC layer generates a MAC-I (by using a MAC super sub-PDU) based on a high layer indication, which is specifically as follows.

Step 1: For each MAC SDU X submitted by a high layer received by a MAC layer of the sending terminal, the high layer indicates whether the MAC SDU X needs to participate in MAC layer security processing.

Step 2: The MAC layer of the sending terminal generates the MAC PDU, including the following operations.
A: Generate a corresponding MAC sub-PDU for the received MAC SDU X;
B: Generate a corresponding MAC sub-PDU for the generated MAC CE;
C: Concatenate the MAC sub-PDUs including the MAC SDU X on which the MAC layer security processing needs to be performed and the MAC CE together, to perform integrity protection (generate a MAC-I for all MAC sub-PDUs) and/or encryption.
D: Generate a MAC Super sub-PDU (as shown in FIG. 7), including:
   generating a common super header of a part participating in the MAC layer security processing (including: a high layer MAC SDU and a MAC CE).

The super header includes one or more of the following pieces of information:
an SN explicitly carried: a serial number used for encryption and/or integrity protection; and
a MAC-I used for integrity protection (carried only when the integrity protection is enabled).

Length field: a length of a part of the MAC super sub-PDU payload (namely, a remaining part of the MAC super sub-PDU except the sub-header).

In this way, the receiving terminal may learn, based on the length field, a part in the received MAC PDU that needs to be performed with security processing, namely, decryption and/or integrity verification.

In addition, if the SN is not explicitly carried in the MAC Super header, the SN may be mapped to the SN through a resource time position, a resource frequency position, or a resource time-frequency position of a wireless resource used for transmission of the MAC PDU (namely, implicitly carried).

The MAC Super sub-PDU may be located in front of the MAC PDU, or may be located behind another MAC sub-PDU. This is not limited.

### Embodiment IV

In this embodiment, as shown in FIG. 6, the MAC layer generates a MAC-I (indicated by using a MAC CE) based on a high layer indication, which is specifically as follows.

Step 1: For each MAC SDU X submitted by a high layer received by a MAC layer of the sending terminal, the high layer indicates whether the MAC SDU X needs to participate in MAC layer security processing.

Step 2: The MAC layer of the sending terminal generates the MAC PDU, including the following operations.
A: Generate a corresponding MAC sub-PDU for the received MAC SDU X;
B: Generate a corresponding MAC sub-PDU for the generated MAC CE;
C: Concatenate the MAC sub-PDUs including the MAC SDU X on which the MAC layer security processing needs to be performed and the MAC CE together, to perform integrity protection (generate a MAC-I for all MAC sub-PDUs) and/or encryption.
D: Generate a Y MAC CE (Y MAC CE) corresponding to a newly defined Y MAC sub-PDU; and
E: The Y MAC sub-PDU is located before data processed in C. As shown in FIG. 6, after/at the right side of the Y MAC sub-PDU, data providing a security service on the MAC layer is provided, and the length is L (indicated by Y MAC CE). Another part in the MAC PDU is a part that does not participate in MAC layer security processing.

In this way, the receiving terminal may learn a part in the received MAC PDU that needs to be performed with security processing, namely, decryption and/or integrity verification.

In addition, the Y MAC CE may include one or more of the following pieces of information:
an SN explicitly carried: a serial number used for encryption and/or integrity protection;
a MAC-I used for integrity protection; or
a length of data of which a security service is provided by the MAC layer.

If the SN is not explicitly carried in the MAC PDU, the SN may be mapped to the SN through a resource time position, a resource frequency position, or a resource time-frequency position of a wireless resource used for transmission of the MAC PDU (namely, implicitly carried).

In addition, the MAC sub-PDU corresponding to the Y MAC CE may be the first MAC sub-PDU of the MAC PDU, or may be located after another MAC sub-PDU. This is not limited.

### Embodiment V

This embodiment mainly describes operations of a receiving terminal, which is specifically as follows.

Step 1: The MAC layer of the receiving terminal starts integrity protection verification and/or decryption based on a high layer configuration and/or a network side configuration.

Step 2: The receiving terminal receives a MAC PDU, and identifies, based on content in the MAC PDU, a part on which MAC security protection is performed, including:
(1) using a position of a new MAC CE in the MAC PDU (as shown in Embodiment II); or
(2) using a payload part of a super MAC sub-PDU (as shown in Embodiment III); or
(3) using a position of the new MAC CE and the indication information, such as a length field, included in the new MAC CE (as shown in Embodiment IV);

Step 3: The receiving terminal performs the decryption if the decryption is started.

Step 4: The receiving terminal performs the integrity protection verification if the integrity protection verification is started.

Step 5: Submit a high layer of high layer data on which decryption and/or integrity check is completed, and notify the high layer of a security operation completed by the MAC layer, for example, notify the high layer that decryption of the MAC SDU is completed, or notify the high layer that an integrity protection acknowledgement of the MAC SDU is completed, or notify the high layer that an integrity protection acknowledgement and decryption of the MAC SDU are completed.

Because the high layer is notified in step 5, the following problems can be avoided.

It is assumed that the sending terminal is an attacker, the sending terminal sends a PDCP control PDU to the receiving terminal. Because no integrity protection key exists, is no bottom layer security measure (such as integrity protection) is started.

In this way, after the MAC of the receiving terminal receives the MAC PDU, it may be considered that the MAC integrity acknowledgement (namely, the integrity protection is verified by the high layer) for the corresponding sub-PDU in the MAC PDU does not need to be started. Therefore, the MAC layer submits the data packet on which integrity protection is not verified to the high layer. After the data packet reaches the PDCP after processing, if the PDCP indicates that the control PDU is verified on the MAC layer, the PDCP control PDU on which the integrity protection is not verified is applied to the receiving terminal, causing a potential security risk.

Step 6: Discard, for the received MAC CE, the MAC CE if the MAC CE is not protected, or cannot be identified, or the integrity verification fails.

It should be noted that in the foregoing plurality of embodiments, a description is provided only by using an example in which the target layer is the MAC layer. In this embodiment of this application, when the target layer is the RLC layer, reference may be made to the implementation of the MAC layer for the implementation of the RLC layer. Details are not described herein again.

In embodiments of this application, the following may be implemented.
1. Sending terminal: A bottom layer starts bottom layer security (encryption and/or integrity protection) on the high layer data packet based on the high layer indication.
2. Sending terminal: a bottom layer identifier identifies a data block on which bottom layer security processing (encryption and/or integrity protection) is performed, so that the receiving terminal determines a data block on which security processing (decryption and/or integrity protection acknowledgement) needs to be performed.
3. Receiving terminal: a part on which a bottom layer security operation is performed in the received data is identified; and a corresponding bottom layer security solution operation is performed.
4. Receiving terminal: a part on which bottom layer security needs to be performed in the received data is identified, and a data block on which the integrity protection acknowledgement fails is directly discarded by the bottom layer. Optionally, the high layer is notified that the integrity protection verification on the data packet fails.
5. Receiving terminal: A data block on which the integrity protection verification succeeds is submitted to the high layer after the bottom layer processing, and the high layer is notified that the integrity protection verification succeeds for the data block.
6. Receiving terminal: A part in the received data on which the bottom layer security operation is not performed is submitted to the high layer after performing processing specified by another protocol layer that does not include a security resolution operation, and the high layer is notified that the integrity protection verification on the data block is not started.
7. Receiving terminal: When applying the data submitted at the corresponding bottom layer, the high layer determines whether the bottom layer integrity protection verification is needed and succeeds. If the bottom layer integrity protection verification is needed but fails, the high layer discards the data packet.

In this embodiment of this application, a security function may be provided at the bottom layer (for example, the MAC layer and the RLC layer), to protect security of the PDU controlled by the PDCP/RLC and the MAC CE.

Refer to FIG. 9. FIG. 9 is a structural diagram of a message transmission apparatus according to an embodiment of this application. As shown in FIG. 9, the message transmission apparatus 900 includes:
a processing module 901, configured to perform security processing on target content at a target layer, where the target layer includes a packet data convergence protocol PDCP layer and/or a protocol layer below the PDCP layer; in a case that the target layer includes the PDCP layer, the target content includes at least one of data or signaling generated by the PDCP layer; and in a case that the target layer includes the protocol layer below the PDCP layer, the target content includes at least one of the following: upper layer data or high layer data received by the target layer, upper layer signaling or high layer signaling received by the target layer, or signaling generated by the target layer; and
a sending module 902, configured to send a target message, where the target message includes content from the security processing.

Optionally, the security processing includes at least one of the following:
encryption or integrity protection.

Optionally, in a case that the target content includes a plurality of pieces of content, the encryption includes:
concatenating the plurality of pieces of content, and encrypting the concatenated content; and/or
in a case that the target content includes a plurality of pieces of content, the integrity protection includes:
   concatenating the plurality of pieces of content, and performing integrity protection on the concatenated content.

Optionally, the target message further includes:
a first sub-protocol data unit PDU or a first sub-header, where the first sub-PDU or the first sub-header is used to indicate at least one of the following:
a position of the content from the security processing in the target message; or
a position, in the target message, of content on which the security processing is not performed by the target layer.

Optionally, the first sub-PDU or the first sub-header indicates, through a position of the first sub-PDU or the first sub-header in the target message, at least one of the following:
a position of the content from the security processing in the target message; or
a position, in the target message, of content on which the security processing is not performed by the target layer.

Optionally, content in the target message located on a first side of the first sub-PDU or the first sub-header includes the content from the security processing; and/or
content in the target message located on a second side of the first sub-PDU or the first sub-header includes the content on which the security processing is not performed; and
the first side and the second side are two sides opposite to each other.

Optionally, the first sub-PDU or the first sub-header is further used to indicate at least one of the following:
a parameter used for encryption;
a parameter used for integrity protection;
a bit stream used for integrity protection; or
a length corresponding to the content from the security processing.

In a case that the first sub-PDU or the first sub-header indicates the length corresponding to the content from the security processing, at least one of the following is indicated through the position of the first sub-PDU or the first sub-header in the target message and the length corresponding to the content from the security processing:
a position of the content from the security processing in the target message; or
a position, in the target message, of content on which the security processing is not performed by the target layer.

Optionally, the first sub-PDU or the first sub-header is used to explicitly indicate at least one of the parameter used for encryption or the parameter used for integrity protection; or
the first sub-PDU or the first sub-header implicitly indicates, through a transmission resource of the target message, at least one of the parameter used for encryption or the parameter used for integrity protection.

Optionally, the parameter includes a serial number.

Optionally, the first sub-PDU is a first media access control MAC sub-protocol data unit PDU, the first MAC sub-PDU includes a first MAC control element CE, and the first MAC CE is a MAC CE used to indicate at least one of the following:
a position of the content from the security processing in the target message; or
a position, in the target message, of content on which the security processing is not performed by the target layer.

Optionally, the first MAC CE is used to indicate at least one of the following:
a parameter used for encryption;
a parameter used for integrity protection;
a bit stream used for integrity protection; or
a length corresponding to the content from the security processing.

In a case that the first MAC CE indicates the length corresponding to the content from the security processing, the first MAC CE indicates at least one of the following based on the length corresponding to the content from the security processing and a position of the first MAC sub-PDU in the target message:
a position of the content from the security processing in the target message; or
a position, in the target message, of content on which the security processing is not performed by the target layer.

Optionally, the first sub-header is a MAC sub-header of a second MAC sub-PDU included in the target message, and the second MAC sub-PDU further includes the content from the security processing.

Optionally, the MAC sub-header is further used to indicate at least one of the following:
a parameter used for encryption;
a parameter used for integrity protection;
a bit stream used for integrity protection; or
a length field, where the length field is used to indicate a length of a load part of the second MAC sub-PDU, and the load part includes the content from the security processing.

Optionally, the apparatus further includes:
a receiving module, configured to receive, by the target layer of the sending terminal, a processing indication, where the processing indication is used to indicate at least one of the following:
performing security processing on the target content, or skipping performing security processing on the target content;
content that needs security processing; or
content that does not need security processing.

Optionally, the target layer includes at least one of the following: a MAC layer or an RLC layer;
in a case that the target layer includes the MAC layer, the target message includes a MAC PDU or a MAC transport block TB; and
in a case that the target layer includes the RLC layer, the target message includes an RLC PDU.

Optionally, in a case that the target layer includes the MAC layer, the target content includes at least one of the following:
a MAC sub-PDU corresponding to a MAC service data unit SDU or a MAC sub-PDU corresponding to a second MAC CE.

The MAC SDU includes at least one of data received by the MAC layer or signaling received by the MAC layer; and
the second MAC CE is signaling generated by the MAC layer.

The message transmission apparatus can improve communication security.

The resource configuration apparatus in embodiments of this application may be an electronic device, for example, an electronic device having an operating system, or a component in an electronic device, such as an integrated circuit or a chip. For example, the electronic device may be a terminal, or may be another device other than the terminal. For example, the terminal may include, but is not limited to, the types of terminals listed in embodiments of this application. The another device may be a server, a network attached storage (Network Attached Storage, NAS), or the like. This is not specifically limited in this embodiment of this application.

The message transmission apparatus provided in this embodiment of this application can implement all processes implemented in the method embodiment of FIG. 2, and achieve the same technical effects. To avoid repetition, details are not described herein.

Refer to FIG. 10. FIG. 10 is a structural diagram of a message transmission apparatus according to an embodiment of this application. As shown in FIG. 10, the message transmission apparatus 1000 includes:
a receiving module 1001, configured to receive a target message; and
a verification module 1002, configured to perform, by the receiving terminal in a case that the target message includes content from security processing, a security verification operation on the content from the security processing at a target layer.

The content from the security processing includes: content obtained by performing security processing on target content at the target layer by a sending terminal.

The target layer includes a packet data convergence protocol PDCP layer and/or a protocol layer below the PDCP layer.

Optionally, the apparatus further includes at least one of the following:
a first discarding module, configured to by the target layer of the receiving terminal, the content from the security processing in a case that the security verification operation indicates that the security verification fails; or
a first submission module, configured to submit, by the target layer of the receiving terminal, first content obtained from the security verification operation to a high layer.

Optionally, the apparatus further includes at least one of the following:
a first notification module, configured to notify, by the target layer of the receiving terminal, the high layer that security verification on the content fails in a case that the receiving terminal discards the content carried in the target message; or
a second notification module, configured to notify, by the target layer of the receiving terminal in a case that the target layer of the receiving terminal submits content obtained from the security verification operation to the high layer, the high layer that security verification on the content obtained by the security verification operation succeeds.

Optionally, the apparatus further includes:
a second submission module, configured to submit, by the target layer of the receiving terminal in a case that the target layer determines that the target message includes content on which security processing is not performed, second content on which security verification is not performed by the target layer to the high layer; and
a second discarding module, configured to discard, by the high layer of the receiving terminal, the second content submitted by the target layer, where the second content is content on which security verification needs to be performed by the target layer.

Optionally, the security processing includes at least one of the following:
encryption or integrity protection; and
the security verification operation includes at least one of the following:
   decryption or integrity protection verification.

Optionally, the target message further includes:
a first sub-protocol data unit PDU or a first sub-header, where the first sub-PDU or the first sub-header is used to indicate at least one of the following:
a position of the content from the security processing in the target message; or
a position, in the target message, of content on which the security processing is not performed by the target layer.

The verification module 1002 is configured to: perform, by the receiving terminal, a security verification operation on the content from the security processing at the target layer in a case that the receiving terminal determines that the target message includes the content from the security processing, based on the first PDU or the first sub-header.

Optionally, the first sub-PDU or the first sub-header indicates, through a position of the first sub-PDU or the first sub-header in the target message, at least one of the following:
a position of the content from the security processing in the target message; or
a position, in the target message, of content on which the security processing is not performed by the target layer.

Optionally, content in the target message located on a first side of the first sub-PDU or the first sub-header includes the content from the security processing; and/or
content in the target message located on a second side of the first sub-PDU or the first sub-header includes the content on which the security processing is not performed; and
the first side and the second side are two sides opposite to each other.

Optionally, the first sub-PDU or the first sub-header is further used to indicate at least one of the following:
a parameter used for encryption;
a parameter used for integrity protection;
a bit stream used for integrity protection; or
a length corresponding to the content from the security processing.

The verification module 1002 is configured to: perform, by the receiving terminal, the security verification operation on the content from the security processing at the target layer based on at least one of the parameter used for encryption, the parameter used for integrity protection, or the bit stream used for integrity protection in a case that the receiving terminal determines that the target message includes the content from the security processing based on the first PDU or the first sub-header and determines the position of the content from the security processing in the target message based on the first PDU or the first sub-header. The receiving terminal determines the position of the content from the security processing in the target message based on the position of the first sub-PDU or the first sub-header in the target message and the length corresponding to the content from the security processing in a case that the first sub-PDU or the first sub-header indicates the length corresponding to the content from the security processing.

Optionally, the first sub-PDU is a first media access control MAC sub-protocol data unit PDU, the first MAC sub-PDU includes a first MAC control element CE, and the first MAC CE is a new MAC CE used to indicate at least one of the following:
a position of the content from the security processing in the target message; or
a position, in the target message, of content on which the security processing is not performed by the target layer.

Optionally, the first MAC CE is used to indicate at least one of the following:
a parameter used for encryption;
a parameter used for integrity protection;
a bit stream used for integrity protection; or
a length corresponding to the content from the security processing.

In a case that the first MAC CE indicates the length corresponding to the content from the security processing, the first MAC CE indicates at least one of the following based on the length corresponding to the content from the security processing and a position of the first MAC sub-PDU in the target message:
a position of the content from the security processing in the target message; or
a position, in the target message, of content on which the security processing is not performed by the target layer.

Optionally, the first sub-header is a MAC sub-header of a second MAC sub-PDU included in the target message, and the second MAC sub-PDU further includes the content from the security processing.

Optionally, the MAC sub-header is further used to indicate at least one of the following:
a parameter used for encryption;
a parameter used for integrity protection;
a bit stream used for integrity protection; or
a length field, where the length field is used to indicate a length of a load part of the second MAC sub-PDU, and the load part includes the content from the security processing.

Optionally, the target layer includes at least one of the following: a MAC layer or an RLC layer;
in a case that the target layer includes the MAC layer, the target message includes a MAC PDU or a MAC transport block TB; and
in a case that the target layer includes the RLC layer, the target message includes an RLC PDU.

Optionally, in a case that the target layer includes the MAC layer, the target content includes at least one of the following: a MAC sub-PDU corresponding to a MAC service data unit SDU or a MAC sub-PDU corresponding to a second MAC CE.

The MAC SDU includes at least one of data received by the MAC layer of the sending terminal or signaling received by the MAC layer.

The second MAC CE is signaling generated by the MAC layer of the sending terminal.

The message transmission apparatus can improve communication security.

The message transmission apparatus in embodiments of this application may be an electronic device, for example, an electronic device having an operating system, or may be a component in the electronic device, for example, an integrated circuit or a chip. The electronic device may be a terminal or a network side device.

The message transmission apparatus provided in this embodiment of this application can implement all processes implemented in the method embodiment of FIG. 8, and achieve the same technical effects. To avoid repetition, details are not described herein.

Optionally, as shown in FIG. 11, an embodiment of this application further provides a communication device 1100, including a processor 1101 and a memory 1102. The memory 1102 stores a program or instructions executable in the processor 1101. For example, when the communication device 1100 is a sending terminal, the program or the instructions, when executed by the processor 1101, implement the steps of the foregoing embodiment of the message transmission method at the sending terminal side, and can achieve the same technical effects. In a case that the communication device 1100 is a receiving terminal, the program or the instructions, when executed by the processor 1101, implement the steps of the above embodiment of the message transmission method at the receiving terminal, and can achieve the same technical effects. To avoid repetition, details are not described herein.

An embodiment of this application further provides a communication device, including a processor and a communication interface. The processor is configured to perform security processing on target content at a target layer. The target layer includes a packet data convergence protocol PDCP layer and/or a protocol layer below the PDCP layer; in a case that the target layer includes the PDCP layer, the target content includes at least one of data or signaling generated by the PDCP layer; and in a case that the target layer includes the protocol layer below the PDCP layer, the target content includes at least one of the following: upper layer data or high layer data received by the target layer, upper layer signaling or high layer signaling received by the target layer, or signaling generated by the target layer; and the communication interface is configured to send a target message, where the target message includes content from the security processing. Alternatively, the communication interface is configured to receive a target message. The processor is configured to perform, by the receiving terminal in a case that the target message includes content from security processing, a security verification operation on the content from the security processing at a target layer. The content from the security processing includes content obtained by performing security processing on target content at the target layer by a sending terminal. The target layer includes a packet data convergence protocol PDCP layer and/or a protocol layer below the PDCP layer. The embodiment of the communication device corresponds to the embodiment of the message transmission method, and all implementation processes and implementations of the method embodiment are applicable to the embodiment of the communication device, and can achieve the same technical effects.

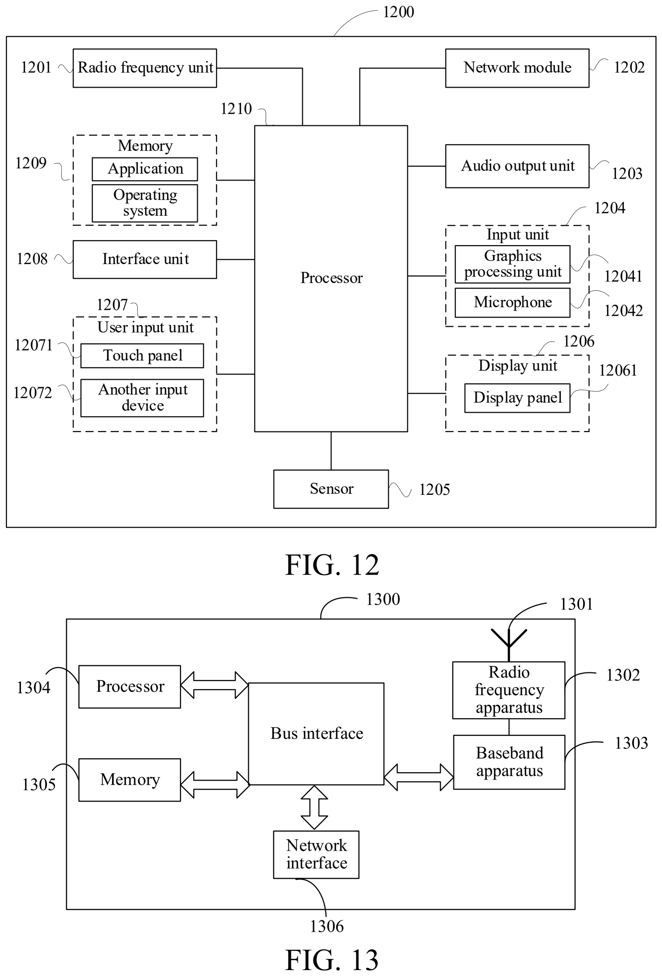

Specifically, FIG. 12 is a schematic diagram of a hardware structure of a communication device according to an embodiment of this application.

The communication device 1200 includes, but is not limited to, at least some of components such as a radio frequency unit 1201, a network module 1202, an audio output unit 1203, an input unit 1204, a sensor 1205, a display unit 1206, a user input unit 1207, an interface unit 1208, a memory 1209, and a processor 1210.

A person skilled in the art may understand that the communication device 1200 may further include a power supply (for example, a battery) for supplying power to the components. The power supply may be logically connected to the processor 1210 through a power management system, thereby implementing functions such as charging, discharging, and power consumption management through the power management system. The structure of the communication device shown in FIG. 12 does not constitute a limitation on the communication device. The communication device may include more or fewer components than those shown in the figure, or some merged components, or different component arrangements. Details are not described herein again.

It should be noted that, in this embodiment of this application, the input unit 1204 may include a graphics processing unit (Graphics Processing Unit, GPU) 12041 and a microphone 12042. The graphics processing unit 12041 processes image data of a static picture or a video obtained by an image capture apparatus (for example, a camera) in a video capture mode or an image capture mode. The display unit 1206 may include a display panel 12061. The display panel 12061 may be configured in a form such as a liquid crystal display or an organic light-emitting diode. The user input unit 1207 includes at least one of a touch panel 12071 and another input device 12072. The touch panel 12071 is also referred to as a touch screen. The touch panel 12071 may include two parts: a touch detection apparatus and a touch controller. Another input device 12072 may include but is not limited to a physical keyboard, a function button (for example, a volume control button or a power button), a trackball, a mouse, and a joystick. Details are not described herein.

In this embodiment of this application, the radio frequency unit 1201 receives downlink data from a network side device, and then may transmit the data to the processor 1210 for processing. In addition, the radio frequency unit 1201 may send uplink data to the network side device. Generally, the radio frequency unit 1201 includes, but is not limited to, an antenna, an amplifier, a transceiver, a coupler, a low noise amplifier, a duplexer, and the like.

The memory 1209 may be configured to store a software program or instructions and various data. The memory 1209 may include mainly a first storage area for storing a program or instructions and a second storage area for storing data. The first storage area may store an operating system, an application or instructions required for at least one function (for example, a sound playback function and an image playback function), and the like. In addition, the memory 1209 may include a volatile memory or a non-volatile memory, or the memory 1209 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1209 in this embodiment of this application includes, but is not limited to, these memories and any other suitable types of memories.

The processor 1210 may include one or more processing units. Optionally, an application processor and a modem processor may be integrated into the processor 1210. The application processor mainly processes an operating system, a user interface, an application, and the like. The modem processor mainly processes wireless communication signals, for example, may be baseband processor. It may be understood that the foregoing modem processor may alternatively not be integrated into the processor 1210.

The processor 1210 is configured to: perform security processing on target content at a target layer, where the target layer includes a packet data convergence protocol PDCP layer and/or a protocol layer below the PDCP layer; in a case that the target layer includes the PDCP layer, the target content includes at least one of data or signaling generated by the PDCP layer; and in a case that the target layer includes the protocol layer below the PDCP layer, the target content includes at least one of the following: upper layer data or high layer data received by the target layer, upper layer signaling or high layer signaling received by the target layer, or signaling generated by the target layer.

The radio frequency unit 1201 is configured to send a target message, where the target message includes content from the security processing.

Optionally, the security processing includes at least one of the following:
encryption or integrity protection.

Optionally, in a case that the target content includes a plurality of pieces of content, the encryption includes:
concatenating the plurality of pieces of content, and encrypting the concatenated content; and/or
in a case that the target content includes a plurality of pieces of content, the integrity protection includes:
   concatenating the plurality of pieces of content, and performing integrity protection on the concatenated content.

Optionally, the target message further includes:
a first sub-protocol data unit PDU or a first sub-header, where the first sub-PDU or the first sub-header is used to indicate at least one of the following:
a position of the content from the security processing in the target message; or
a position, in the target message, of content on which the security processing is not performed by the target layer.

Optionally, the first sub-PDU or the first sub-header indicates, through a position of the first sub-PDU or the first sub-header in the target message, at least one of the following:
a position of the content from the security processing in the target message; or
a position, in the target message, of content on which the security processing is not performed by the target layer.

Optionally, content in the target message located on a first side of the first sub-PDU or the first sub-header includes the content from the security processing; and/or
content in the target message located on a second side of the first sub-PDU or the first sub-header includes the content on which the security processing is not performed; and
the first side and the second side are two sides opposite to each other.

Optionally, the first sub-PDU or the first sub-header is further used to indicate at least one of the following:
a parameter used for encryption;
a parameter used for integrity protection;
a bit stream used for integrity protection; or
a length corresponding to the content from the security processing.

In a case that the first sub-PDU or the first sub-header indicates the length corresponding to the content from the security processing, at least one of the following is indicated through the position of the first sub-PDU or the first sub-header in the target message and the length corresponding to the content from the security processing:
a position of the content from the security processing in the target message; or
a position, in the target message, of content on which the security processing is not performed by the target layer.

Optionally, the first sub-PDU or the first sub-header is used to explicitly indicate at least one of the parameter used for encryption or the parameter used for integrity protection; or
the first sub-PDU or the first sub-header implicitly indicates, through a transmission resource of the target message, at least one of the parameter used for encryption or the parameter used for integrity protection.

Optionally, the parameter includes a serial number.

Optionally, the first sub-PDU is a first media access control MAC sub-protocol data unit PDU, the first MAC sub-PDU includes a first MAC control element CE, and the first MAC CE is a MAC CE used to indicate at least one of the following:
a position of the content from the security processing in the target message; or
a position, in the target message, of content on which the security processing is not performed by the target layer.

Optionally, the first MAC CE is used to indicate at least one of the following:
a parameter used for encryption;
a parameter used for integrity protection;
a bit stream used for integrity protection; or
a length corresponding to the content from the security processing.

In a case that the first MAC CE indicates the length corresponding to the content from the security processing, the first MAC CE indicates at least one of the following based on the length corresponding to the content from the security processing and a position of the first MAC sub-PDU in the target message:
a position of the content from the security processing in the target message; or
a position, in the target message, of content on which the security processing is not performed by the target layer.

Optionally, the first sub-header is a MAC sub-header of a second MAC sub-PDU included in the target message, and the second MAC sub-PDU further includes the content from the security processing.

Optionally, the MAC sub-header is further used to indicate at least one of the following:
a parameter used for encryption;
a parameter used for integrity protection;
a bit stream used for integrity protection; or
a length field, where the length field is used to indicate a length of a load part of the second MAC sub-PDU, and the load part includes the content from the security processing.

Optionally, the processor 1210 is further configured to:
receive, by the target layer of the sending terminal, a processing indication, where the processing indication is used to indicate at least one of the following:
performing security processing on the target content, or skipping performing security processing on the target content;
content that needs security processing; or
content that does not need security processing.

Optionally, the target layer includes at least one of the following: a MAC layer or an RLC layer;
in a case that the target layer includes the MAC layer, the target message includes a MAC PDU or a MAC transport block TB; and
in a case that the target layer includes the RLC layer, the target message includes an RLC PDU.

Optionally, in a case that the target layer includes the MAC layer, the target content includes at least one of the following:
a MAC sub-PDU corresponding to a MAC service data unit SDU or a MAC sub-PDU corresponding to a second MAC CE.

The MAC SDU includes at least one of data received by the MAC layer or signaling received by the MAC layer; and
the second MAC CE is signaling generated by the MAC layer.

It should be noted that in this embodiment of this application, a description is provided by using an example in which the sending terminal is the terminal.

The foregoing communication device can improve communication security.

Specifically, an embodiment of this application further provides a communication device. As shown in FIG. 13, the communication device 1300 includes an antenna 1301, a radio frequency apparatus 1302, a baseband apparatus 1303, a processor 1304, and a memory 1305. The antenna 1301 is connected to the radio frequency apparatus 1302. In an uplink direction, the radio frequency apparatus 1302 receives information through the antenna 1301, and sends the received information to the baseband apparatus 1303 for processing. In a downlink direction, the baseband apparatus 1303 processes to-be-sent information, and sends the processed to-be-sent information to the radio frequency apparatus 1302. The radio frequency apparatus 1302 processes the received information, and then sends the processed information through the antenna 1301.

In the above embodiment, the method performed by the communication device may be implemented in the baseband apparatus 1303. The baseband apparatus 1303 includes a baseband processor.

The baseband apparatus 1303 may include, for example, at least one baseband board. A plurality of chips are arranged on the baseband board, as shown in FIG. 13. One of the chips is, for example, a baseband processor, and is connected to the memory 1305 through a bus interface to call a program in the memory 1305, to perform the operations of the network device shown in the foregoing method embodiment.

The communication device may further include a network interface 1306. The interface is, for example, a common public radio interface (common public radio interface, CPRI).

Specifically, the communication device 1300 in this embodiment of this application further includes instructions or a program stored in the memory 1305 and executable in the processor 1304. The processor 1304 calls the instructions or the program in the memory 1305 to perform the method performed by each module shown in FIG. 10, and achieves the same technical effect. To avoid repetition, details are not described herein.

The radio frequency apparatus 1302 may be configured to receive a target message.

The processor 1304 is configured to perform, in a case that the target message includes content from security processing, a security verification operation on the content from the security processing at a target layer.

The content from the security processing includes: content obtained by performing security processing on target content at the target layer by a sending terminal.

The target layer includes a packet data convergence protocol PDCP layer and/or a protocol layer below the PDCP layer.

Optionally, the processor 1304 is further configured to perform at least one of the following:
the target layer of the receiving terminal discards the content from the security processing in a case that the security verification operation indicates that the security verification fails; or
the target layer of the receiving terminal submits first content obtained from the security verification operation to a high layer.

Optionally, the processor 1304 is further configured to perform at least one of the following:
the target layer of the receiving terminal notifies the high layer that security verification on the content fails in a case that the receiving terminal discards the content carried in the target message; or
the target layer of the receiving terminal notifies, in a case that the target layer of the receiving terminal submits content obtained from the security verification operation to the high layer, the high layer that security verification on the content obtained by the security verification operation succeeds.

Optionally, the processor 1304 is further configured to:
submit, by the target layer of the receiving terminal in a case that the target layer determines that the target message includes content on which security processing is not performed, second content on which security verification is not performed by the target layer to the high layer; and
discard, by the high layer of the receiving terminal, the second content submitted by the target layer, where the second content is content on which security verification needs to be performed by the target layer.

Optionally, the security processing includes at least one of the following:
encryption or integrity protection; and
the security verification operation includes at least one of the following:
   decryption or integrity protection verification.

Optionally, the target message further includes:
a first sub-protocol data unit PDU or a first sub-header, where the first sub-PDU or the first sub-header is used to indicate at least one of the following:
a position of the content from the security processing in the target message; or
a position, in the target message, of content on which the security processing is not performed by the target layer.

The performing, in a case that the target message includes content from security processing, a security verification operation on the content from the security processing at a target layer includes:
performing a security verification operation on the content from the security processing at the target layer in a case that the receiving terminal determines that the target message includes the content from the security processing, based on the first PDU or the first sub-header.

Optionally, the first sub-PDU or the first sub-header indicates, through a position of the first sub-PDU or the first sub-header in the target message, at least one of the following:
a position of the content from the security processing in the target message; or
a position, in the target message, of content on which the security processing is not performed by the target layer.

Optionally, content in the target message located on a first side of the first sub-PDU or the first sub-header includes the content from the security processing; and/or
content in the target message located on a second side of the first sub-PDU or the first sub-header includes the content on which the security processing is not performed; and
the first side and the second side are two sides opposite to each other.

Optionally, the first sub-PDU or the first sub-header is further used to indicate at least one of the following:
a parameter used for encryption;
a parameter used for integrity protection;
a bit stream used for integrity protection; or
a length corresponding to the content from the security processing.

The performing a security verification operation on the content from the security processing at the target layer in a case that the receiving terminal determines that the target message includes the content from the security processing, based on the first PDU or the first sub-header includes:
performing the security verification operation on the content from the security processing at the target layer based on at least one of the parameter used for encryption, the parameter used for integrity protection, or the bit stream used for integrity protection in a case that the receiving terminal determines that the target message includes the content from the security processing based on the first PDU or the first sub-header and determines the position of the content from the security processing in the target message based on the first PDU or the first sub-header. The receiving terminal determines the position of the content from the security processing in the target message based on the position of the first sub-PDU or the first sub-header in the target message and the length corresponding to the content from the security processing in a case that the first sub-PDU or the first sub-header indicates the length corresponding to the content from the security processing.

Optionally, the first sub-PDU is a first media access control MAC sub-protocol data unit PDU, the first MAC sub-PDU includes a first MAC control element CE, and the first MAC CE is a new MAC CE used to indicate at least one of the following:
a position of the content from the security processing in the target message; or
a position, in the target message, of content on which the security processing is not performed by the target layer.

Optionally, the first MAC CE is used to indicate at least one of the following:
a parameter used for encryption;
a parameter used for integrity protection;
a bit stream used for integrity protection; or
a length corresponding to the content from the security processing.

In a case that the first MAC CE indicates the length corresponding to the content from the security processing, the first MAC CE indicates at least one of the following based on the length corresponding to the content from the security processing and a position of the first MAC sub-PDU in the target message:
a position of the content from the security processing in the target message; or
a position, in the target message, of content on which the security processing is not performed by the target layer.

Optionally, the first sub-header is a MAC sub-header of a second MAC sub-PDU included in the target message, and the second MAC sub-PDU further includes the content from the security processing.

Optionally, the MAC sub-header is further used to indicate at least one of the following:
a parameter used for encryption;
a parameter used for integrity protection;
a bit stream used for integrity protection; or
a length field, where the length field is used to indicate a length of a load part of the second MAC sub-PDU, and the load part includes the content from the security processing.

Optionally, the target layer includes at least one of the following: a MAC layer or an RLC layer;
in a case that the target layer includes the MAC layer, the target message includes a MAC PDU or a MAC transport block TB; and
in a case that the target layer includes the RLC layer, the target message includes an RLC PDU.

Optionally, in a case that the target layer includes the MAC layer, the target content includes at least one of the following: a MAC sub-PDU corresponding to a MAC service data unit SDU or a MAC sub-PDU corresponding to a second MAC CE.

The MAC SDU includes at least one of data received by the MAC layer of the sending terminal or signaling received by the MAC layer.

The second MAC CE is signaling generated by the MAC layer of the sending terminal.

It should be noted that in this embodiment, a description is provided by using an example in which the receiving terminal is the network side device.

The foregoing communication device can improve communication security.

An embodiment of this application further provides a readable storage medium. The storage medium may be volatile or non-volatile. The readable storage medium stores a program or instructions. The program or the instructions, when executed by a processor, implement the steps of the message transmission method in embodiments of this application.

The processor may be a processor of the terminal in the foregoing embodiments. The readable storage medium includes a computer-readable storage medium, such as a computer read-only memory ROM, a random access memory RAM, a magnetic disk, or an optical disk.

An embodiment of this application further provides a chip. The chip includes a processor and a communication interface. The communication interface is coupled to the processor. The processor is configured to execute a program or instructions, to implement the processes of the foregoing message transmission method embodiments, and can achieve the same technical effects. To avoid repetition, details are not described herein.

It should be understood that the chip in this embodiment of this application may also be referred to as a system level chip, a system chip, a chip system, a system on chip, or the like.

An embodiment of this application further provides a computer program/program product. The computer program/program product is stored in a storage medium. The computer program/program product is executed by at least one processor to implement the processes of embodiments of the foregoing message transmission method, and can achieve the same technical effect. To avoid repetition, details are not described herein again.

An embodiment of this application further provides a message transmission system, including a sending terminal and a receiving terminal. The sending terminal may be configured to perform steps of the message transmission method at the sending terminal side provided in this embodiment of this application. The network side device may be configured to perform steps of the message transmission method at the receiving terminal side provided in this embodiment of this application.

It should be noted that terms "comprise", "include" or any other variants herein are intended to encompass non-exclusive inclusion, so that a process, a method, an article, or an apparatus including a series of elements not only include those elements, but also includes another element not listed explicitly or includes intrinsic elements for the process, the method, the article, or the apparatus. Without any further limitation, an element defined by the phrase "include one ..." does not exclude existence of an additional same element in the process, the method, the article, or the apparatus that includes the element. In addition, it should be noted that the scope of the method and the apparatus in implementations of this application is not limited to function execution in the order shown or discussed, and may further include function execution in a substantially simultaneous manner or in the opposite order based on the functions. For example, the described method may be performed in different order from the described order, and various steps may also be added, omitted, or combined. In addition, features described with reference to some examples may be combined in another example.

According to the descriptions of the foregoing implementations, a person skilled in the art may clearly learn that the method in the foregoing embodiments may be implemented by software with a necessary universal hardware platform, or may be implemented by hardware. However, in many cases, the software with a necessary universal hardware platform is a preferred implementation. Based on such an understanding, the technical solutions of this application, in essence, or a part contributing to the related art may be embodied in a form of a computer software product. The computer software product is stored in a storage medium (such as a ROM/RAM, a magnetic disk, or an optical disk), including a plurality of instructions for causing a terminal (which may be a mobile phone, a computer, a server, an air conditioner, a network device, or the like) to perform the method in embodiments of this application.

Although embodiments of this application are described above with reference to the accompanying drawings, this application is not limited to the specific implementations described above. The foregoing specific implementations are illustrative but not restrictive. With the enlightenment of this application, a person of ordinary skill in the art may make many forms without departing from the concept of this application and the protection scope of the claims. These forms fall within the protection of this application.

## Claims

1. A message transmission method, comprising:
performing, by a sending terminal, security processing on target content at a target layer, wherein the target layer comprises a packet data convergence protocol PDCP layer and/or a protocol layer below the PDCP layer; in a case that the target layer comprises the PDCP layer, the target content comprises at least one of data or signaling generated by the PDCP layer; and in a case that the target layer comprises the protocol layer below the PDCP layer, the target content comprises at least one of the following: upper layer data or high layer data received by the target layer, upper layer signaling or high layer signaling received by the target layer, or signaling generated by the target layer; and
sending, by the sending terminal, a target message, wherein the target message comprises content from the security processing.

2. The method according to claim 1, wherein the security processing comprises at least one of the following:
encryption or integrity protection.

3. The method according to claim 2, wherein in a case that the target content comprises a plurality of pieces of content, the encryption comprises:
concatenating the plurality of pieces of content, and encrypting the concatenated content; and/or
in a case that the target content comprises a plurality of pieces of content, the integrity protection comprises:
concatenating the plurality of pieces of content, and performing integrity protection on the concatenated content.

4. The method according to any one of claims 1 to 3, wherein the target message further comprises:
a first sub-protocol data unit PDU or a first sub-header, wherein the first sub-PDU or the first sub-header is used to indicate at least one of the following:
a position of the content from the security processing in the target message; or
a position, in the target message, of content on which the security processing is not performed by the target layer.

5. The method according to claim 4, wherein the first sub-PDU or the first sub-header indicates, through a position of the first sub-PDU or the first sub-header in the target message, at least one of the following:
the position of the content from the security processing in the target message; or
the position, in the target message, of content on which the security processing is not performed by the target layer.

6. The method according to claim 4 or 5, wherein content in the target message located on a first side of the first sub-PDU or the first sub-header comprises the content from the security processing; and/or
content in the target message located on a second side of the first sub-PDU or the first sub-header comprises the content on which the security processing is not performed; and
the first side and the second side are two sides opposite to each other.

7. The method according to any one of claims 4 to 6, wherein the first sub-PDU or the first sub-header is further used to indicate at least one of the following:
a parameter used for encryption;
a parameter used for integrity protection;
a bit stream used for integrity protection; or
a length corresponding to the content from the security processing; and
in a case that the first sub-PDU or the first sub-header indicates the length corresponding to the content from the security processing, at least one of the following is indicated through the position of the first sub-PDU or the first sub-header in the target message and the length corresponding to the content from the security processing:
the position of the content from the security processing in the target message; or
the position, in the target message, of content on which the security processing is not performed by the target layer.

8. The method according to claim 7, wherein the first sub-PDU or the first sub-header is used to explicitly indicate at least one of the parameter used for encryption or the parameter used for integrity protection; or
the first sub-PDU or the first sub-header implicitly indicates, through a transmission resource of the target message, at least one of the parameter used for encryption or the parameter used for integrity protection.

9. The method according to claim 7, wherein the parameter comprises a serial number.

10. The method according to any one of claims 4 to 9, wherein the first sub-PDU is a first media access control MAC sub-protocol data unit PDU, the first MAC sub-PDU comprises a first MAC control element CE, and the first MAC CE is a MAC CE used to indicate at least one of the following:
the position of the content from the security processing in the target message; or
the position, in the target message, of content on which the security processing is not performed by the target layer.

11. The method according to claim 10, wherein the first MAC CE is used to indicate at least one of the following:
a parameter used for encryption;
a parameter used for integrity protection;
the bit stream used for integrity protection; or
a length corresponding to the content from the security processing; and
in a case that the first MAC CE indicates the length corresponding to the content from the security processing, the first MAC CE indicates at least one of the following based on the length corresponding to the content from the security processing and a position of the first MAC sub-PDU in the target message:
the position of the content from the security processing in the target message; or
the position, in the target message, of content on which the security processing is not performed by the target layer.

12. The method according to any one of claims 4 to 9, wherein the first sub-header is a MAC sub-header of a second MAC sub-PDU comprised in the target message, and the second MAC sub-PDU further comprises the content from the security processing.

13. The method according to claim 12, wherein the MAC sub-header is further used to indicate at least one of the following:
a parameter used for encryption;
a parameter used for integrity protection;
a bit stream used for integrity protection; or
a length field, wherein the length field is used to indicate a length of a load part of the second MAC sub-PDU, and the load part comprises the content from the security processing.

14. The method according to any one of claims 1 to 13, further comprising:
receiving, by the target layer of the sending terminal, a processing indication, wherein the processing indication is used to indicate at least one of the following:
performing security processing on the target content, or skipping performing security processing on the target content;
content that needs security processing; or
content that does not need security processing.

15. The method according to any one of claims 1 to 14, wherein the target layer comprises at least one of the following: a MAC layer or an RLC layer;
in a case that the target layer comprises the MAC layer, the target message comprises a MAC PDU or a MAC transport block TB; and
in a case that the target layer comprises the RLC layer, the target message comprises an RLC PDU.

16. The method according to claim 15, wherein in a case that the target layer comprises the MAC layer, the target content comprises at least one of the following:
a MAC sub-PDU corresponding to a MAC service data unit SDU or a MAC sub-PDU corresponding to a second MAC CE,
the MAC SDU comprises at least one of data received by the MAC layer or signaling received by the MAC layer; and
the second MAC CE is signaling generated by the MAC layer.

17. A message transmission method, comprising:
receiving, by a receiving terminal, a target message; and
performing, by the receiving terminal in a case that the target message comprises content from security processing, a security verification operation on the content from the security processing at a target layer, wherein
the content from the security processing comprises: content obtained by performing security processing on target content at the target layer by a sending terminal; and
the target layer comprises a packet data convergence protocol PDCP layer and/or a protocol layer below the PDCP layer.

18. The method according to claim 17, further comprising at least one of the following:
discarding, by the target layer of the receiving terminal, the content from the security processing in a case that the security verification operation indicates that the security verification fails; or
submitting, by the target layer of the receiving terminal, first content obtained from the security verification operation to a high layer.

19. The method according to claim 18, further comprising at least one of the following:
notifying, by the target layer of the receiving terminal, the high layer that security verification on the content fails in a case that the receiving terminal discards the content carried in the target message; or
notifying, by the target layer of the receiving terminal in a case that the target layer of the receiving terminal submits content obtained from the security verification operation to the high layer, the high layer that security verification on the content obtained by the security verification operation succeeds.

20. The method according to any one of claims 17 to 19, further comprising:
submitting, by the target layer of the receiving terminal in a case that the target layer determines that the target message comprises content on which security processing is not performed, second content on which security verification is not performed by the target layer to the high layer; and
discarding, by the high layer of the receiving terminal, the second content submitted by the target layer, wherein the second content is content on which security verification needs to be performed by the target layer.

21. The method according to any one of claims 17 to 20, wherein the security processing comprises at least one of the following:
encryption or integrity protection; and
the security verification operation comprises at least one of the following:
decryption or integrity protection verification.

22. The method according to any one of claims 17 to 21, wherein the target message further comprises:
a first sub-protocol data unit PDU or a first sub-header, wherein the first sub-PDU or the first sub-header is used to indicate at least one of the following:
a position of the content from the security processing in the target message; or
a position, in the target message, of content on which the security processing is not performed by the target layer; and
the performing, by the receiving terminal in a case that the target message comprises content from security processing, a security verification operation on the content from the security processing at a target layer comprises:
performing, by the receiving terminal, a security verification operation on the content from the security processing at the target layer in a case that the receiving terminal determines that the target message comprises the content from the security processing, based on the first PDU or the first sub-header.

23. The method according to claim 22, wherein the first sub-PDU or the first sub-header indicates, through a position of the first sub-PDU or the first sub-header in the target message, at least one of the following:
the position of the content from the security processing in the target message; or
the position, in the target message, of content on which the security processing is not performed by the target layer.

24. The method according to claim 23, wherein content in the target message located on a first side of the first sub-PDU or the first sub-header comprises the content from the security processing; and/or
content in the target message located on a second side of the first sub-PDU or the first sub-header comprises the content on which the security processing is not performed; and
the first side and the second side are two sides opposite to each other.

25. The method according to any one of claims 22 to 24, wherein the first sub-PDU or the first sub-header is further used to indicate at least one of the following:
a parameter used for encryption;
a parameter used for integrity protection;
a bit stream used for integrity protection; or
a length corresponding to the content from the security processing; and
the performing, by the receiving terminal, a security verification operation on the content from the security processing at the target layer in a case that the receiving terminal determines that the target message comprises the content from the security processing, based on the first PDU or the first sub-header comprises:
performing, by the receiving terminal, the security verification operation on the content from the security processing at the target layer based on at least one of the parameter used for encryption, the parameter used for integrity protection, or the bit stream used for integrity protection in a case that the receiving terminal determines that the target message comprises the content from the security processing based on the first PDU or the first sub-header and determines the position of the content from the security processing in the target message based on the first PDU or the first sub-header, wherein the receiving terminal determines the position of the content from the security processing in the target message based on the position of the first sub-PDU or the first sub-header in the target message and the length corresponding to the content from the security processing in a case that the first sub-PDU or the first sub-header indicates the length corresponding to the content from the security processing.

26. The method according to any one of claims 22 to 25, wherein the first sub-PDU is a first media access control MAC sub-protocol data unit PDU, the first MAC sub-PDU comprises a first MAC control element CE, and the first MAC CE is a new MAC CE used to indicate at least one of the following:
the position of the content from the security processing in the target message; or
the position, in the target message, of content on which the security processing is not performed by the target layer.

27. The method according to claim 26, wherein the first MAC CE is used to indicate at least one of the following:
a parameter used for encryption;
a parameter used for integrity protection;
the bit stream used for integrity protection; or
a length corresponding to the content from the security processing; and
in a case that the first MAC CE indicates the length corresponding to the content from the security processing, the first MAC CE indicates at least one of the following based on the length corresponding to the content from the security processing and a position of the first MAC sub-PDU in the target message:
the position of the content from the security processing in the target message; or
the position, in the target message, of content on which the security processing is not performed by the target layer.

28. The method according to any one of claims 22 to 27, wherein the first sub-header is a MAC sub-header of a second MAC sub-PDU comprised in the target message, and the second MAC sub-PDU further comprises the content from the security processing.

29. The method according to claim 28, wherein the MAC sub-header is further used to indicate at least one of the following:
a parameter used for encryption;
a parameter used for integrity protection;
a bit stream used for integrity protection; or
a length field, wherein the length field is used to indicate a length of a load part of the second MAC sub-PDU, and the load part comprises the content from the security processing.

30. The method according to any one of claims 17 to 29, wherein the target layer comprises at least one of the following: a MAC layer or an RLC layer;
in a case that the target layer comprises the MAC layer, the target message comprises a MAC PDU or a MAC transport block TB; and
in a case that the target layer comprises the RLC layer, the target message comprises an RLC PDU.

31. The method according to claim 30, wherein in a case that the target layer comprises the MAC layer, the target content comprises at least one of the following: a MAC sub-PDU corresponding to a MAC service data unit SDU or a MAC sub-PDU corresponding to a second MAC CE,
the MAC SDU comprises at least one of data received by the MAC layer of the sending terminal or signaling received by the MAC layer; and
the second MAC CE is signaling generated by the MAC layer of the sending terminal.

32. A message transmission apparatus, comprising:
a processing module, configured to perform security processing on target content at a target layer, wherein the target layer comprises a packet data convergence protocol PDCP layer and/or a protocol layer below the PDCP layer; in a case that the target layer comprises the PDCP layer, the target content comprises at least one of data or signaling generated by the PDCP layer; and in a case that the target layer comprises the protocol layer below the PDCP layer, the target content comprises at least one of the following: upper layer data or high layer data received by the target layer, upper layer signaling or high layer signaling received by the target layer, or signaling generated by the target layer; and
a sending module, configured to send a target message, wherein the target message comprises content from the security processing.

33. A message transmission apparatus, comprising:
a receiving module, configured to receive a target message; and
a verification module, configured to perform, in a case that the target message comprises content from security processing, a security verification operation on the content from the security processing at a target layer, wherein
the content from the security processing comprises: content obtained by performing security processing on target content at the target layer by a sending terminal; and
the target layer comprises a packet data convergence protocol PDCP layer and/or a protocol layer below the PDCP layer.

34. A communication device, comprising a memory and a processor, wherein the memory stores a program or instructions executable in the processor, and the program or the instructions, when executed by the processor, implements the steps of the message transmission method according to any one of claims 1 to 16, or the program or the instructions, when executed by the processor, implements the steps of the message transmission method according to any one of claims 17 to 31.

35. A readable storage medium, storing a program or instructions, wherein the program or the instructions, when executed by a processor, implements the steps of the message transmission method according to any one of claims 1 to 16, or the program or instructions, when executed by a processor, implements the steps of the message transmission method according to any one of claims 17 to 31.
